# EUROPÄISCHE PATENTANMELDUNG

(11) **EP 4 470 818 A1**
(43) Veröffentlichungstag der Anmeldung: **04.12.2024**
(21) Anmeldenummer: 23176671.8
(22) Anmeldetag: 01.06.2023
(51) Int. Cl.: B60L 13/10, B60L 5/00, B60L 1/00, B65G 47/00, B65G 54/02, H02J 50/10

(54) **MAGNETISCH LEVITIERBARE TRANSPORTEINHEIT, TRANSPORTVORRICHTUNG MIT EINER STATOR-ANORDNUNG UND WENIGSTENS EINER MAGNETISCH LEVITIERBAREN TRANSPORTEINHEIT, PRODUKTIONSANLAGE UND VERFAHREN ZUR ENERGETISCHEN KOPPLUNG EINER MAGNETISCH LEVITERBAREN TRANSPORTEINHEIT**

(71) Anmelder: TT Innovation AG, 6300 Zug (CH)
(72) Erfinder: Geiser, Christoph Joschi, 4103 Bottmingen (CH); Müller, Mathieu, 68510 Sierentz (FR); Zeller, Mike, 4246 Wahlen (CH)
(74) Vertreter: Mertzlufft-Paufler, Cornelius

(57) **Zusammenfassung**

Erfindungsgemäß wird somit bei einer Transportvorrichtung, bestehend aus einer magnetisch levitierbaren Transporteinheit und einer mit wenigstens einem Sektor ausgebildeten Stator-Anordnung vorgeschlagen, dass eine energetische, vorzugsweise induktive Kopplung zwischen einer an der Transporteinheit ausgebildeten Empfangsspule und einer Sendespule eines Sektors der Stator-Anordnung zur kontinuierlichen und/oder diskontinuierlichen Energieversorgung bzw. Energieübertragung, vorzugsweise innerhalb eines kontrollierten Raums, erfolgt.

## Beschreibung

Die Erfindung betrifft eine magnetisch levitierbare Transporteinheit.

Die Erfindung betrifft weiter eine Transportvorrichtung mit einer Stator-Anordnung und wenigstens einer magnetisch levitierbaren Transporteinheit, insbesondere einem Mover, die auf wenigstens einem Sektor der Stator-Anordnung verfahrbar ist.

Die Erfindung betrifft zudem eine Produktionsanlage vorzugsweise zur Herstellung von pharmazeutischen Erzeugnissen.

Die Erfindung betrifft weiter ein Verfahren zur energetischen Kopplung einer magnetisch levitierbaren Transporteinheit.

Die Erfindung betrifft schließlich eine Verwendung einer Energieübertragung an einer magnetisch levitierbaren Transporteinheit.

Levitierbare Transporteinheiten sind bekannt und werden beispielsweise eingesetzt, um eine Nutzlast in magnetisch durch ein Spulenfeld und/oder durch eine permanent-magnetische Anordnung, das oder die in einer Antriebsfläche angeordnet sein kann/können, kontrollierter Weise zu bewegen und/oder zu halten. Die Antriebsfläche kann hierbei horizontal, vertikal oder beliebig ausgerichtet sein. Die Antriebsfläche stellt somit eine Stator-Anordnung bzw. einen Levitationserzeuger bereit.

Der Begriff der Levitation kann hierbei beispielsweise dadurch charakterisierbar sein, dass eine mit wenigstens einem Permanentmagneten ausgerüstete oder anderweitig magnetisch aktive Transporteinheit in einem kontrolliert geformten Magnetfeld schwebt und/oder durch gesteuerte Veränderung des Magnetfelds bewegt wird. Dieses stationäre Magnetfeld kann beispielsweise mit einem Levitationserzeuger bereitstellbar sein.

Alternativ oder zusätzlich ist es auch möglich, an der beweglichen Transporteinheit ein kontrolliert gesteuertes Magnetfeld zu erzeugen, beispielsweise durch Bestromung von Spulen und/oder Bewegung von Permanentmagneten, um in einem zeitlich konstanten Magnetfeld des Levitationserzeugers kontrolliert zu schweben und die Transporteinheit in kontrollierter Weise zu bewegen.

Es ist aus der Praxis bekannt, zwei levitierbare Transporteinheiten zusammenwirken zu lassen, um mechanische Funktionalitäten, die über den reinen Transport hinausgehen, beispielsweise ein Heben und/oder ein Greifen, zu realisieren. Die Antriebsenergie für diese zusätzlichen Funktionalitäten kommt hierbei aus der Antriebsbewegung der Transporteinheiten selbst.

Der Erfindung liegt die Aufgabe zugrunde, eine magnetisch levitierbare Transporteinheit mit zusätzlichen Funktionalitäten auszustatten.

Zur Lösung der genannten Aufgabe schlägt die Erfindung die Merkmale von Anspruch 1 vor. Insbesondere wird somit erfindungsgemäß eine magnetisch levitierbare Transporteinheit mit einer vorzugsweise induktiv und/oder galvanisch versorgbaren elektrischen Funktionseinheit vorgeschlagen. Somit ist ein möglicher Funktionsumfang der eingangs beschriebenen Transporteinheiten praktisch beliebig durch eine elektrisch versorgte Funktionseinheit erweiterbar.

Es ist aus der Praxis bekannt, insbesondere schienengeführte Transporteinheiten mit elektrischen Leistungsempfangseinheiten auszubilden.

Die Erfindung schlägt somit allgemein eine Einrichtung eines zusätzlichen, von einer Antriebsbewegung der Transporteinheit abgekoppelten, Energieversorgungsweges zu einer Versorgung einer elektrischen Funktionseinheit auf der Transporteinheit vor. Beispielsweise kann vorgesehen sein, dass dieser Energieversorgungsweg auch aktiv bleibt, wenn ein Antrieb der levitierbaren Transporteinheit abgeschaltet ist.

Dabei kann beispielsweise zudem vorgesehen sein, dass die elektrische Funktionseinheit über elektrische Kontakte insbesondere galvanisch energetisch versorgbar ist.

Besonders vorteilhaft ist dabei, dass somit insbesondere ein kontaktloser bzw. berührungsloser Energieaustausch zwischen der elektrischen Funktionseinheit der magnetisch levitierbaren Transporteinheit und einer weiteren elektrischen Funktionseinheit, die beispielsweise elektrische Energie aus einer stationären Energiequelle und/oder Einspeiseeinheit bezieht und an die elektrische Funktionseinheit der Transporteinheit überträgt, stattfinden kann.

Alternativ oder zusätzlich wird erfindungsgemäß vorgeschlagen, dass die elektrische Funktionseinheit eine elektrische Speichereinheit hat. Somit ist ein Betrieb der Funktionseinheit auch außerhalb einer Zone einer elektrischen Versorgung und/oder Ankopplung realisierbar.

Dabei kann beispielsweise vorgesehen sein, dass die elektrische Speichereinheit ein wiederaufladbares galvanisches Element, insbesondere ein Akkumulator ist. Weiterhin kann beispielsweise vorgesehen sein, dass die elektrische Speichereinheit ein Kondensator ist.

Die Speichereinheit kann auch als nicht aufladbare Speichereinheit vorzugsweise austauschbar befestigt sein. Es ist auch eine austauschbare Speichereinheit verwendbar, die außerhalb der Transporteinheit ausladbar ist und/oder aufgeladen wird.

Weiterhin kann beispielsweise vorgesehen sein, dass die elektrische Speichereinheit mittels Gleichstrom-Schnellladung aufgeladen werden kann, wodurch wiederum vorteilhaft kurze Ladezeiten und damit korrelierende kurze Ausfallszeiten der magnetisch levitierbaren Transporteinheit erreicht werden können.

Besonders vorteilhaft ist dabei, dass somit elektrische Energie, die der elektrischen Funktionseinheit vorzugsweise über eine induktive Kopplung zugeführt werden kann, gespeichert werden kann.

Alternativ oder zusätzlich wird erfindungsgemäß vorgeschlagen, dass die elektrische Funktionseinheit einen elektrischen Verbraucher hat.

Besonders vorteilhaft ist dabei, dass die vorzugsweise induktiv aufgenommene elektrische Energie beispielsweise direkt und/oder kontinuierlich in Bewegungsenergie und/oder Lageenergie gewandelt werden kann.

Besonders vorteilhaft ist es zudem, wenn der elektrische Verbraucher von der elektrischen Speichereinheit versorgt wird, wodurch wiederum eine diskontinuierliche Versorgung der elektrischen Funktionseinheit realisiert werden kann.

Alternativ oder zusätzlich wird erfindungsgemäß vorgeschlagen, dass die elektrische Funktionseinheit eine Leistungsempfangseinheit hat.

Dabei kann beispielsweise vorgesehen sein, dass die Leistungsempfangseinheit ausgebildet ist, insbesondere induktiv und kontaktlos und/oder galvanisch über vorzugsweise wenigstens zwei elektrische Kontakte eine Leistung, vorzugsweise eine elektrische Leistung, zu empfangen.

Besonders vorteilhaft ist es, wenn die Leistungsempfangseinheit die elektrische Leistung empfängt und beispielsweise den elektrischen Verbraucher direkt und/oder kontinuierlich betreibt oder insbesondere dazu genutzt werden kann, die elektrische Speichereinheit, die wiederum beispielsweise elektrische Energie für den elektrischen Verbraucher bereitstellen kann, aufzuladen.

Insbesondere kann die Leistungsempfangseinheit wenigstens einen induktiv koppelbaren Schwingkreis und/oder wenigstens ein Kontaktpaar haben. Somit sind schwach resonante Kopplungen auch über eine größere Distanz mit annehmbar hohem Wirkungsgrad erreichbar. Dies kann beispielsweise dann von Vorteil sein, wenn eine Versorgung der Funktionseinheit auch in einer maximal von einer Antriebsfläche entfernten, levitierten Position gewährleistet werden soll.

Mit dem wenigstens einem Kontaktpaar kann dabei beispielsweise eine galvanische Versorgbarkeit der elektrischen Funktionseinheit, beispielsweise über Schleifkontakte, generiert werden.

Besonders vorteilhaft ist dabei, dass somit beispielsweise eine resonant induktive Kopplung realisiert werden kann. Vorteilhaft ist zudem, dass die Leistungsempfangseinheit somit Leistungen über eine größere Reichweite empfangen kann.

Somit kann beispielsweise vorgesehen sein, dass die Levitation der magnetisch levitierbaren Transporteinheit über eine die elektrische Funktionseinheit versorgende elektrische Energiequelle erfolgt, wodurch wiederum vorteilhaft insbesondere durch den induktiv koppelbaren Schwingkreis der Leistungsempfangseinheit eine höhere Levitation der magnetisch levitierbaren Transporteinheit bei gleichbleibender Leistungsaufnahme ermöglicht werden kann.

Bei einer weiteren vorteilhaften Ausgestaltung kann vorgesehen sein, dass die Transporteinheit mit wenigstens einer Empfangsspule ausgebildet ist.

Besonders vorteilhaft ist dabei, dass somit in der Empfangsspule, beispielsweise durch eine Sendespule, eine Spannung induziert werden kann, die wiederum beispielsweise die elektrische Speichereinheit aufladen und/oder direkt den elektrischen Verbraucher antreiben kann.

Bei einer weiteren vorteilhaften Ausgestaltung kann vorgesehen sein, dass der elektrische Verbraucher der magnetisch levitierbaren Transporteinheit wenigstens eine Antriebseinheit, insbesondere ein Elektromotor, ist. Somit lassen sich komplexe mechanische Arbeitsabläufe einfach auf einer Transporteinheit realisieren.

Der Elektromotor kann dabei beispielsweise dazu ausgebildet sein, rotierende und/oder translatorische Bewegungen auf der magnetisch levitierbaren Transporteinheit zu ermöglichen.

Besonders vorteilhaft ist dabei, dass somit verschiedene von der magnetisch levitierbaren Transportvorrichtung möglicherweise aufgenommene antreibbare Vorrichtungen je nach Bedarf unterschiedlich von der Antriebseinheit angetrieben werden können.

Bei einer weiteren vorteilhaften Ausgestaltung kann vorgesehen sein, dass die elektrische Speichereinheit eine austauschbare und/oder auf der Transporteinheit stationär installierte Batterie ist.

Die Batterie kann dabei beispielsweise die elektrische Antriebseinheit versorgen.

Dabei ist besonders vorteilhaft, dass beispielsweise ein Defekt und somit ein Ausfall der elektrischen Speichereinheit und somit der elektrischen Speichereinheit durch eine Austauschbarkeit schnell behoben und die Ausfallszeit der Transporteinheit reduziert werden kann. Bei einer stationär auf der Transporteinheit installierten Batterie kann beispielsweise vorteilhaft eine höhere Batteriekapazität mit daraus resultierenden reduzierten Ladezyklen generiert werden.

Bei einer weiteren vorteilhaften Ausgestaltung kann vorgesehen sein, dass die Transporteinheit mit zumindest einem Sensor ausgebildet ist, insbesondere der einen Zustand, insbesondere einen Ladezustand, einer, beispielsweise der bereits erwähnten, elektrischen Speichereinheit erfassen.

Besonders vorteilhaft ist dabei, dass somit realisiert werden kann, dass die magnetisch levitierbare Transporteinheit, beispielsweise bei einem zuvor festgelegten Grenzwert, der einen geringen Ladezustand der elektrischen Speichereinheit definiert, ein Signal ausgibt und/oder verarbeitet.

Somit kann ebenfalls vorteilhaft beispielsweise ein Ausfall der Transporteinheit verhindert und ein Aufladevorgang initiiert werden.

Der wenigstens eine Sensor kann weiterhin beispielsweise zur Bestimmung sämtlicher weiterer physikalischer Eigenschaften ausbildbar sein. Somit sind beispielsweise ein optischer Sensor, beispielsweise eine Inspektionskamera, ein Distanzsensor, ein Temperatursensor, ein Feuchtesensor oder weitere Sensoren verwendbar.

Bei einer weiteren vorteilhaften Ausgestaltung kann vorgesehen sein, dass die Transporteinheit mit einer Temperiereinrichtung ausgebildet ist.

Die Temperiervorrichtung kann dabei beispielsweise eine Vorrichtung zum Heizen und/oder zum Kühlen sein. Besonders vorteilhaft ist dabei, dass somit verschiedene beispielsweise auf der magnetisch levitierbaren Transporteinheit positionierte Erzeugnisse, beispielsweise pharmazeutische Erzeugnisse, auf eine bestimmte Temperatur, die möglicherweise nahezu konstant zu halten ist, abgekühlt und/oder erwärmt werden können. Es ist somit auch ein kontrolliertes Erhitzen, beispielsweise vor einem Verschluss, ausführbar.

Bei einer weiteren vorteilhaften Ausgestaltung kann vorgesehen sein, dass die Transporteinheit mit einem motorisch angetriebenen Teil ausgebildet ist. Hierbei kann dies beispielsweise ein Drehmotor, ein Linearmotor oder auch eine einfache Antriebsform wie ein Hubmagnet sein.

Besonders vorteilhaft ist dabei, dass somit beispielsweise auf der magnetisch levitierbaren Transporteinheit positionierte Vorrichtungen und/oder einzelne Elemente von Vorrichtungen automatisiert gesteuert werden können.

Eine Vorrichtung, die beispielsweise auf der magnetisch levitierbaren Transporteinheit positioniert und motorisch bewegt werden kann, kann dabei beispielsweise ein Beschriftungssystem sein, mit dem beispielsweise Chargennummern auf verschiedenen Behältnissen hinterlegt werden können.

Zusätzlich kann vorgesehen sein, dass das motorisch angetriebene Teil beispielsweise ein Roboter ist.

Besonders vorteilhaft ist dabei, dass über einen motorisch angetriebenen Roboter unterschiedliche Prozesse und/oder Prozessabläufe automatisierter, schneller und/oder präziser durchgeführt werden können.

Alternativ oder zusätzlich kann vorgesehen sein, dass das motorisch angetriebene Teil beispielsweise ein Greifelement ist.

Besonders vorteilhaft ist dabei, dass über ein motorisch angetriebenes Greifelement beispielsweise Behältnisse von einer magnetisch levitierbaren Transporteinheit an eine andere bzw. weitere magnetisch levitierbare Transporteinheit übergeben und/oder von einer Prozesseinheit aufgenommen und/oder an eine solche abgegeben werden können. Ebenfalls vorteilhaft ist somit, dass Prozessabläufe automatisiert und/oder beschleunigt werden können.

Eine Prozesseinheit kann beispielsweise zur Ausführung einer Funktion selbstständig betreibbar sein. Mehrere Funktionseinheiten können beispielsweise für einen Warenfluss durch Transporteinheiten verbindbar sein. Die Prozesseinheiten können beispielsweise stationär und/oder verfahrbar sein.

Alternativ oder zusätzlich kann vorgesehen sein, dass das motorisch angetriebene Teil beispielsweise eine bewegbare Behälteraufnahme ist.

Besonders vorteilhaft ist dabei, dass somit Behälter, die beispielsweise pharmazeutische Erzeugnisse beinhalten, beispielsweise geschwenkt und somit präzise gesteuert und automatisiert umgefüllt werden können. Auch vorteilhaft ist, wenn die pharmazeutischen Erzeugnisse durch eine gesteuerte Handlingseinheit, beispielsweise auf der Transporteinheit, einer Prozess- und/oder Bearbeitungseinheit angenähert werden können, wodurch wiederum ein erleichtertes Prozessieren und/oder Weiterverarbeiten ermöglicht werden kann.

Beispielsweise kann ebenso vorgesehen sein, dass der Roboter beispielsweise mit einem Greifelement ausgebildet ist, welches beispielsweise als bewegbare Behälteraufnahme fungiert.

Bei einer weiteren vorteilhaften Ausgestaltung kann vorgesehen sein, dass die Transporteinheit mit einer Waage ausgebildet ist. Hierbei kann die zusätzliche elektrische Versorgung beispielsweise für eine elektronische Erfassung eines Gewichts und/oder eine Übertragung der erfassten Messwerte eingesetzt werden.

Besonders vorteilhaft ist dabei, dass somit beispielsweise Behälter, die vorzugsweise auf der magnetisch levitierbaren Transporteinheit positioniert werden können, vor und/oder nach und/oder während einem Befüllvorgang gewogen werden können.

Bei einer weiteren vorteilhaften Ausgestaltung kann vorgesehen sein, dass die Transporteinheit mit einer vorzugsweise drahtlosen Kommunikationseinheit und/oder mit einer Datenverarbeitungsvorrichtung als elektrische Funktionseinheit ausgebildet ist. Dies erweitert die Funktionalität auf der Transporteinheit beträchtlich. Bei einer weiteren vorteilhaften Ausgestaltung kann vorgesehen sein, dass die Transporteinheit mit einem Partikelzähler ausgebildet ist.

Ein Partikelzähler kann dabei beispielsweise vorteilhaft dazu verwendet werden, mögliche mikrobiologische Verunreinigungen, beispielsweise innerhalb eines Reinraums, zu überwachen.

Dabei kann beispielsweise vorgesehen sein, dass auf einer magnetisch levitierbaren Transporteinheit ein Behälter beispielsweise mit einem pharmazeutischen Erzeugnis innerhalb eines Reinraums befüllt wird, während, beispielsweise simultan, über eine weitere magnetisch levitierbare Transporteinheit vorzugsweise ein Luftstrom des Reinraums mittels des Partikelzählers auf mikrobiologische Verunreinigungen überwacht werden kann.

Somit kann besonders vorteilhaft eine kontinuierliche Prozessüberwachung, beispielsweise zur Überwachung eines Reinraumprozesses, realisiert werden.

Ein Reinraumprozess kann dabei beispielsweise eine aseptische Abfüllung und/oder ein Verschließen und/oder eine Analyse von pharmazeutischen Erzeugnissen sein.

Bei einer weiteren vorteilhaften Ausgestaltung kann vorgesehen sein, dass die Transporteinheit dazu ausgebildet ist, wenigstens ein Dekontaminationssystem aufzunehmen.

Ein Dekontaminationssystem kann dabei beispielsweise dazu verwendet werden, Reinräume insbesondere vor der Durchführung eines Reinraumprozesses zu dekontaminieren. Somit kann vorteilhaft sichergestellt werden, dass der Reinraum zu Beginn des Reinraumprozesses möglichst frei von beispielsweise mikrobiologischen Verunreinigungen ist.

Zusätzlich kann vorgesehen sein, dass die Transporteinheit wenigstens einen Vorratsbehälter und/oder eine Abgabeeinheit trägt.

Besonders vorteilhaft ist es, wenn die den Vorratsbehälter tragende Transporteinheit zusätzlich mit der bereits erwähnten Antriebseinheit ausgebildet ist, wodurch der Vorratsbehälter und/oder die Abgabeeinheit beispielsweise von einer Prozesseinheit zu einer nächsten Prozesseinheit verfahren und/oder übergeben werden kann.

Bei einer weiteren vorteilhaften Ausgestaltung kann vorgesehen sein, dass die Transporteinheit mit einer bewegbaren Crimpingscheibe und/oder Crimpingvorrichtung ausgebildet ist.

Mit einer Crimpingscheibe und/oder einer Crimpingvorrichtung kann beispielsweise ein Verschlussdeckel, welcher beispielsweise auf einem Behälter aufgelegt ist, über eine Kontaktierung umgebördelt und der Behälter somit verschlossen werden.

Besonders vorteilhaft ist dabei, dass über die mit der bewegbaren Crimpingscheibe und/oder Crimpingvorrichtung ausgebildete Transporteinheit, beispielsweise Zustellkräfte genau definiert werden können, wodurch wiederum ebenfalls vorteilhaft ein qualitativ hochwertiges Verschließen des Behälters generiert werden kann.

Bei einer weiteren vorteilhaften Ausgestaltung kann vorgesehen sein, dass die Transporteinheit mit einer antreibbaren Hubvorrichtung ausgebildet ist.

Besonders vorteilhaft ist dabei, dass somit vertikale Bewegungen generiert werden können, wodurch wiederum beispielsweise ein Anfahren verschiedener Prozesseinheiten, die beispielsweise über der Transporteinheit liegen, ermöglicht werden kann.

Insbesondere ist die antreibbare Hubvorrichtung zum Anfahren eines Stopfens ausgebildet, vorzugsweise mit einem auf der Hubvorrichtung befindlichen Behälter.

Der Stopfen kann dabei beispielsweise dazu dienen, den Behälter beispielsweise luftdicht zu verschließen. Besonders vorteilhaft ist dabei, dass somit beispielsweise die Anpresskraft des Behälters über die antreibbare Hubvorrichtung der Transporteinheit eingestellt werden kann.

Insbesondere ist die antreibbare Hubvorrichtung zum Anfahren einer Füllnadel ausgebildet, vorzugsweise mit einem auf der Hubvorrichtung befindlichen Behälter.

Die Spritze kann dabei beispielsweise dazu verwendet werden, eine Flüssigkeit, beispielsweise ein fluides pharmazeutisches Erzeugnis, in den Behälter zu injizieren. Besonders vorteilhaft ist es, wenn der Behälter nach der Injizierung mit dem Stopfen verschlossen wird. Alternativ kann der Behälter beispielsweise vor der Injizierung der Flüssigkeit mit dem Stopfen verschlossen und die Spritze beispielsweise durch den Stopfen hindurchgeführt werden, um eine Verunreinigung der Flüssigkeit größtenteils zu verhindern.

Insbesondere ist die antreibbare Hubvorrichtung zum Anfahren eines Verschlussdeckels ausgebildet, vorzugsweise mit einem auf der Hubvorrichtung befindlichen Behälter.

Besonders vorteilhaft kann die Hubvorrichtung der Transporteinheit, insbesondere nach dem Anfahren der Spritze, den Verschlussdeckel über die Hubvorrichtung anfahren, um den Behälter beispielsweise über die oder eine bewegbare Crimpingscheibe und/oder Crimpingvorrichtung einer weiteren Transporteinheit vollends zu verschließen.

Bei einer weiteren vorteilhaften Ausgestaltung kann vorgesehen sein, dass die Transporteinheit mit einer vorzugsweise bewegbaren Aufnahme für ein Nährmediumsträger, in dem vorzugsweise ein Nährmedium präsentierbar ist, ausgebildet ist.

Vorteilhaft ist, dass das Nährmedium dabei beispielsweise zusätzlich zu einem Partikelzähler, welcher möglicherweise auf einer weiteren Transporteinheit ausgebildet ist, zur Überwachung auf mikrobiologische Verunreinigungen verwendet werden kann.

Bei einer vorteilhaften Ausgestaltung kann vorgesehen sein, dass die Transporteinheit mit einem vorzugsweise abgedichteten Gehäuse ausgebildet ist, insbesondere sodass die wenigstens eine Empfangsspule der magnetisch levitierbaren Transporteinheit vor Verunreinigungen geschützt ist.

Dabei kann beispielsweise vorgesehen sein, dass das Gehäuse beispielsweise nach Richtlinien des "Hygienic Design" konstruiert wird. Als "Hygienic Design" kann dabei beispielsweise die reinigungsgerechte Gestaltung von Bauteilen, Komponenten und/oder Produktionsanlagen verstanden werden. Zudem kann vorgesehen sein, dass beispielsweise das Material des Gehäuses Anforderungen an die Dekontaminierbarkeit erfüllt und mechanischen und chemischen Belastungen standhält.

Weiterhin kann beispielsweise vorgesehen sein, dass die Transporteinheit über das Gehäuse gasdicht abgedichtet werden kann. Weiterhin kann beispielsweise vorgesehen sein, dass zur Kategorisierung der Dichtigkeit des Gehäuses die IP-Schutzartklassen, beispielsweise nach DIN EN 60529, herangezogen werden. Somit kann möglicherweise vorgesehen sein, dass das Gehäuse beispielsweise mindestens die Schutzartklasse IP67 erreicht.

Besonders vorteilhaft ist dabei, dass die Transporteinheit mit der Sendespule beispielsweise vor mikrobiologische Verunreinigungen geschützt werden kann. Vorteilhaft ist zudem, dass somit beispielsweise die Anzahl an Dekontaminationszyklen zur Dekontaminierung der Transporteinheit reduziert werden kann.

Alternativ oder zusätzlich sind zur Lösung der genannten Aufgabe erfindungsgemäß die Merkmale des nebengeordneten, auf eine Transportvorrichtung gerichteten Anspruchs vorgesehen. Insbesondere wird somit zur Lösung der genannten Aufgabe bei einer Transportvorrichtung mit einer Stator-Anordnung und wenigstens einer magnetisch levitierbaren Transporteinheit, insbesondere Mover, die auf wenigstens einem Sektor der Stator-Anordnung verfahrbar ist, erfindungsgemäß vorgeschlagen, dass die magnetisch levitierbare Transporteinheit mit wenigstens einer Empfangsspule ausgebildet ist und dass wenigstens ein Sektor der Stator-Anordnung mit wenigstens einer Sendespule ausgebildet ist, über die eine energetische, vorzugsweise berührungslose und/oder induktive, Kopplung ausbildbar ist.

Die Stator-Anordnung kann dabei beispielsweise ein Planarmotorsystem mit wenigstens einem Sektor sein. Dabei kann beispielsweise vorgesehen sein, dass die magnetisch levitierbare Transporteinheit wenige Millimeter über der Stator-Anordnung berührungslos levitiert.

Die Sendespule kann dabei beispielsweise an eine stationäre Energiequelle und/oder Einspeiseeinheit angeschlossen sein.

Die energetische Kopplung kann dabei beispielsweise zudem über galvanische Kontakte erfolgen.

Besonders vorteilhaft ist, dass somit Energie, insbesondere elektrische Energie, von wenigstens einem Sektor der Stator-Anordnung an die magnetisch levitierbare Transporteinheit übertragen werden kann. Besonders vorteilhaft ist zudem, dass somit vorzugsweise eine elektrische Funktionseinheit der Transporteinheit, beispielsweise ein elektrischer Verbraucher, vorzugsweise angetrieben werden kann.

Bei einer vorteilhaften Ausgestaltung kann vorgesehen sein, dass über die energetische Kopplung eine vorzugsweise resonant induktive Kopplung und/oder eine kapazitive Kopplung zwischen der Transporteinheit und der Stator-Anordnung ausbildbar ist.

Besonders vorteilhaft ist dabei, dass somit beispielsweise die Reichweite der Energieübertragung vergrößert werden kann, wodurch wiederum vorteilhaft ist, dass die Levitation der Transporteinheit auf der Stator-Anordnung beispielsweise verändert und/oder der Einfluss der Levitation auf die Energieübertragung verringert werden kann.

Bei einer vorteilhaften Ausgestaltung kann vorgesehen sein, dass die Empfangsspule der Transporteinheit an einen Schwingkreis gekoppelt ist.

Dabei kann beispielsweise vorgesehen sein, dass eine Resonanzfrequenz des Schwingkreises beispielsweise mit einer Übertragungsfrequenz abgeglichen ist, wodurch wiederum beispielsweise vorteilhaft ein höherer Wirkungsgrad der energetischen Kopplung generiert werden kann.

Besonders vorteilhaft ist dabei zudem, dass über den Schwingkreis beispielsweise die resonant induktive Kopplung zwischen der Transporteinheit und der Stator-Anordnung realisiert werden kann.

Ein weiterer Vorteil ist, dass ein Übertragungs-Frequenzband für eine Energieübertragung an die Transporteinheit von einem Levitations-Frequenzband trennbar ist. Somit kann eine Beeinträchtigung der kontrollierten Steuerung der Transporteinheit(en) durch die Energieübertragung vermindert oder sogar vermieden werden.

Bei einer vorteilhaften Ausgestaltung kann vorgesehen sein, dass wenigstens eine Sendespule des wenigstens einen Sektors der Stator-Anordnung an eine Einspeiseeinheit zur Einprägung eines frequenzstabilisierten und/oder amplitudenkonstanten Stroms ausgebildet ist. Die Frequenzstabilisierung kann beispielsweise zur Ausbildung einer schwach resonanten Kopplung verwendbar sein, die Amplitudenstabilisierung zur Gewährung eines unterbrechungslosen Energieflusses auch bei größerer Leistungsaufnahme an der elektrischen Funktionseinheit.

Besonders vorteilhaft ist dabei, dass somit insbesondere ein stabiler Schwingkreis und somit ein stabiles elektromagnetisches Feld generiert werden kann. Vorteilhaft ist zudem, dass somit ein Ausfall der Transporteinheit aufgrund einer fehlerhaften und/oder unzureichenden energetischen Kopplung bzw. Energieübertragung verhindert werden kann.

Bei einer vorteilhaften Ausgestaltung kann vorgesehen sein, dass über die energetische Kopplung eine vorzugsweise elektrische Speichereinheit der Transporteinheit aufladbar ist.

Dabei kann beispielsweise vorgesehen sein, dass die elektrische Speichereinheit mit einer elektrischen Antriebseinheit energetisch koppelbar ist.

Die elektrische Speichereinheit kann dabei beispielsweise ein Akkumulator sein.

Weiterhin kann beispielsweise vorgesehen sein, dass die Aufladung der elektrischen Speichereinheit über Gleichstrom-Schnellladung erfolgt.

Besonders vorteilhaft ist, dass die elektrische Antriebseinheit somit beispielsweise von der elektrischen Speichereinheit angetrieben werden kann.

Besonders vorteilhaft ist zudem, dass somit eine diskontinuierliche Energieversorgung realisiert werden kann.

Beispielsweise kann dabei vorgesehen sein, lediglich einen Sektor oder vereinzelte Sektoren der Stator-Anordnung abschnittsweise oder vollständig über eine gesamte Fläche des Sektors mit einer Sendespule oder einem Koppelmittel zum Aufladen der elektrischen Speichereinheit und/oder zur Versorgung eines elektrischen Verbrauchers auf der Transporteinheit auszubilden. Hierbei entsteht beispielsweise an den Stellen, an denen die Sendespule oder das (sonstige) Koppelmittel auf dem jeweiligen Sektor ausgebildet ist, ein Energieübertragungsbereich. Dieser Energieübertragungsbereich kann somit beispielsweise abschnittsweise an einem einzelnen Sektor, über den gesamten Sektor, abschnittsweise über mehrere Sektoren oder vollständig über mehrere Sektoren ausgebildet sein.

Bei einer vorteilhaften Ausgestaltung kann vorgesehen sein, dass alle Sektoren der Stator-Anordnung mit wenigstens einer Sendespule ausgebildet sind.

Beispielsweise kann dabei vorgesehen sein, dass die Sendespule lediglich abschnittsweise auf den Sektoren ausgebildet ist.

Dabei kann beispielsweise vorgesehen sein, dass die Sendespulen der Sektoren unabhängig voneinander bestromt werden können.

Besonders vorteilhaft ist dabei, dass somit beispielsweise alle Sektoren der Stator-Anordnung zur Energieübertragung mit der Transporteinheit und/oder weiteren Transporteinheiten energetisch gekoppelt werden können.

Bei einer vorteilhaften Ausgestaltung kann vorgesehen sein, dass die energetische Kopplung dazu ausgebildet ist, eine kontinuierliche Energieversorgung der Transporteinheit aufrechtzuerhalten.

Besonders vorteilhaft ist dabei, dass somit beispielsweise auf eine elektrische Speichereinheit, die beispielsweise eine elektrische Antriebseinheit der Transporteinheit energetisch versorgt, verzichtet werden kann.

Weiterhin ist vorteilhaft, dass beispielsweise Transportunterbrechungen der Transporteinheit, die beispielsweise zum Aufladen der elektrischen Speichereinheit zum Antreiben der elektrischen Antriebseinheit notwendig sind, verhindert werden können.

Bei einer weiteren vorteilhaften Ausgestaltung kann vorgesehen sein, dass die energetische Kopplung zwischen Transporteinheit und Stator-Anordnung auf einer vertikalen Ebene erfolgt.

Dabei kann beispielsweise vorgesehen sein, dass eine horizontale Ebene zur Durchführung eines Prozesses und die vertikale Ebene hauptsächlich zur energetischen Kopplung und/oder zur Aufladung der Transporteinheit ausgebildet ist. Ebenso kann beispielsweise vorgesehen sein, dass die vertikale Ebene zur Durchführung eines Prozesses und die horizontale Ebene zur energetischen Kopplung und/oder zur Aufladung der Transporteinheit ausgebildet ist.

Besonders vorteilhaft ist dabei, dass somit Transporteinheiten, die beispielsweise auf der horizontalen Ebene bewegt werden, nicht von einer energetischen Kopplung, beispielsweise einem Aufladevorgang einer weiteren Transporteinheit, behindert werden.

Alternativ oder zusätzlich sind zur Lösung der genannten Aufgabe erfindungsgemäß die Merkmale des nebengeordneten, auf eine Produktionsanlage gerichteten Anspruchs vorgesehen. Insbesondere wird somit erfindungsgemäß zur Lösung der genannten Aufgabe eine Produktionsanlage, vorzugsweise zur Herstellung von pharmazeutischen Erzeugnissen, mit einem kontrollierten Raum, vorzugsweise einem Isolator und/oder RABS und darin angeordneter Transportvorrichtung vorgeschlagen.

Der kontrollierte Raum kann dabei beispielsweise ein Reinraum sein.

Isolatoren und RABS (Restricted-access barrier system) werden beispielsweise in der pharmazeutischen Industrie zur Herstellung bzw. keimfreien Produktion pharmazeutischer Erzeugnisse verwendet.

Besonders vorteilhaft ist dabei, dass mit der Transportvorrichtung gemäß den bereits aufgeführten Vorteilen beispielsweise automatisierte Prozessabläufe bzw. Produktionsabläufe generiert werden können.

Bei einer vorteilhaften Ausgestaltung kann dabei vorgesehen sein, dass die Produktionsanlage mit Sektoren zum Aufladen und/oder zur energetischen Kopplung an einer Prozesseinheit ausgebildet ist.

Dabei ist besonders vorteilhaft, dass die energetische Kopplung und somit die Energie, beispielsweise zum Antreiben des elektrischen Verbrauchers der Transporteinheit, stetig an den Stellen gewährleistet werden kann, an denen die elektrische Energie zur Durchführung eines Prozesses benötigt wird.

Alternativ oder zusätzlich kann vorgesehen sein, dass die Produktionsanlage mit Sektoren zum Aufladen und/oder zur energetischen Kopplung beabstandet zu einer Prozesseinheit ausgebildet ist.

Dabei kann beispielsweise vorgesehen sein, dass die Transporteinheit mit einer elektrischen Speichereinheit ausgebildet ist und zum Aufladen einen mit einer Sendespule ausgebildeten Sektor zur energetischen Kopplung anfährt.

Dabei kann beispielsweise vorgesehen sein, dass die aufzuladende Transporteinheit den von der Prozesseinheit beabstandeten und zur energetischen Kopplung ausgebildeten Sektor anfährt, während besonders vorteilhaft eine weitere, vorzugsweise bereits aufgeladene Transporteinheit, einen an der Prozesseinheit durchzuführenden Prozesses fortführen kann. Besonders vorteilhaft ist somit, dass die Aufladung der Transporteinheit den durchzuführenden Prozess nicht behindert und eine kontinuierliche Prozessdurchführung begünstigen kann. Es kann weiterhin beispielsweise vorgesehen sein, dass die Transporteinheit, insbesondere Mover, die über die Aufladung aufgenommene Energie direkt zur Durchführung eines Prozesses, beispielsweise zum Antreiben einer Bewegung und/oder Speisen eines Verbrauchers einsetzt und/oder verbraucht, insbesondere in eine zur Durchführung des Prozesses notwendige Energieform umwandelt.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe ein Verfahren zur energetischen Kopplung einer magnetisch levitierbaren Transporteinheit mit einer Empfangsspule durch wenigstens einen Energieübertragungsbereich, insbesondere eine Sendespule eines Sektors einer Stator-Anordnung vorgeschlagen, wobei ein elektrischer Verbraucher an der Transporteinheit von wenigstens einem Sektor der Stator-Anordnung energetisch versorgt wird.

Dabei kann zudem beispielsweise vorgesehen sein, dass mehrere Sektoren der Stator-Anordnung vollständig und/oder abschnittsweise mit einer Sendespule ausgebildet sind, wodurch der elektrische Verbraucher der Transporteinheit beispielsweise wiederum von verschiedenen Sektoren der Stator-Anordnung versorgt werden kann.

Besonders vorteilhaft ist, dass über den von wenigstens einem Sektor der Stator-Anordnung versorgten elektrischen Verbraucher der Transporteinheit insbesondere aufgenommene elektrische Energie entsprechend der Verwendung der Transporteinheit beispielsweise in eine weitere Energieform transformiert werden kann.

Insbesondere ist der elektrische Verbraucher eine elektrische Antriebseinheit. Als elektrische Antriebseinheit kann beispielsweise ein Elektromotor verwendet werden.

Besonders vorteilhaft ist dabei, dass die Transporteinheit somit bewegbar ist. Die Bewegung kann dabei beispielsweise translatorisch und/oder rotatorisch sein.

Alternativ oder zusätzlich wird erfindungsgemäß ein Verfahren zur energetischen Kopplung einer magnetisch levitierbaren Transporteinheit mit einer Empfangsspule durch wenigstens eine Sendespule eines Sektors einer Stator-Anordnung vorgeschlagen, wobei eine elektrische Speichereinheit an der Transporteinheit von wenigstens einem Sektor der Stator-Anordnung energetisch versorgt wird.

Die elektrische Speichereinheit kann dabei beispielsweise ein Akkumulator sein.

Hierbei kann beispielsweise vorgesehen sein, dass die elektrische Speichereinheit den elektrischen Verbraucher, insbesondere die elektrische Antriebseinheit, antreibt. Besonders vorteilhaft ist dabei, dass somit realisiert werden kann, lediglich einen Sektor oder vereinzelte Sektoren der Stator-Anordnung mit einer Empfangsspule auszubilden.

Bei einer vorteilhaften Ausgestaltung kann vorgesehen sein, dass an der magnetisch levitierenden Transporteinheit ein Sensor angeordnet ist, der einen Zustand, insbesondere einen Ladezustand, der elektrischen Speichereinheit und/oder einen Zustand des elektrischen Verbrauchers der Transporteinheit ermittelt.

Der Zustand des elektrischen Verbrauchers kann dabei beispielsweise über eine spezifische physikalische Größe ermittelt und/oder bestimmt werden. Die physikalische Größe kann dabei beispielsweise eine Drehzahl, ein Drehmoment, eine elektrische Leistung, eine Geschwindigkeit, eine Frequenz, ein magnetischer Fluss, eine magnetische Flussdichte, eine Induktivität und/oder eine Beschleunigung sein, ist jedoch nicht auf diese Größen limitiert.

Besonders vorteilhaft ist dabei, dass somit eine permanente Überwachung der elektrischen Speichereinheit und/oder des verwendeten elektrischen Verbrauchers generiert werden kann. Dabei kann beispielsweise vorgesehen sein, dass der Sensor bei einem vordefinierten (Grenz-)Wert, der beispielsweise Auskunft über einen minimalen oder maximalen Ladezustand und/oder beispielsweise eine Überhitzung der elektrischen Speichereinheit ein Signal ausgibt.

Vorteilhaft ist dabei, dass das Signal entweder von einem Bediener und/oder beispielsweise einer Steuereinheit der Transporteinheit erkannt und entsprechende (Gegen)Maßnahmen eingeleitet werden können.

Bei einer weiteren vorteilhaften Ausgestaltung kann vorgesehen sein, dass die Transporteinheit nach einem Signal des hierin beschriebenen und/oder beanspruchten oder eines Sensors einen Sektor anfährt.

Besonders vorteilhaft ist dabei, dass die Transporteinheit somit automatisiert, beispielsweise nach dem Unterschreiten des minimalen Ladezustands, einen Sektor zum Aufladen der elektrischen Speichereinheit anfährt.

Alternativ oder zusätzlich kann vorgesehen sein, dass die Transporteinheit nach einer vorgegebenen Zeitspanne einen Sektor anfährt.

Die Zeitspanne kann dabei beispielsweise eine empirisch ermittelte Zeit zwischen einem maximalen und einem minimalen Ladezustand der elektrischen Speichereinheit sein. Somit kann vorteilhaft die Zeitspanne als Referenzwert des Ladezustands genutzt werden.

Alternativ oder zusätzlich kann vorgesehen sein, dass die Transporteinheit nach einem vorgegebenen Verbrauch einen Sektor anfährt.

Der vorgegebene Verbrauch kann dabei beispielsweise ein vordefinierter Differenzwert des Ladezustandes der elektrischen Speichereinheit sein, bei der die elektrische Speichereinheit der Transporteinheit aufgeladen werden soll.

Alternativ oder zusätzlich zum Sektor, kann auch eine Prozesseinheit von der Transporteinheit angefahren werden.

Die Prozesseinheit kann dabei beispielsweise innerhalb einer hierin beschriebenen Produktionsanlage mit einem kontrollierten Raum sein.

Dabei kann beispielsweise vorgesehen sein, dass die Transporteinheit, beispielsweise nach Erreichen eines maximalen Ladezustands der elektrischen Speichereinheit, welcher beispielsweise von dem Signal übermittelt werden kann, eine Prozesseinheit anfährt.

Bei einer weiteren vorteilhaften Ausgestaltung kann vorgesehen sein, dass eine Funktionseinheit, vorzugsweise bei stehender Transporteinheit und/oder bei sich bewegender Transporteinheit, zumindest eine Prozesseinheit zum Befüllen und eine Prozesseinheit zum Verschließen anfährt, wobei die Funktionseinheit aus einer Versorgung der Transporteinheit gespeist wird. Die Bewegung der Funktionseinheit kann hierbei beispielsweise auf eine Bewegung der Transporteinheit abgestimmt sein. Beispielsweise kann die Bewegung der Funktionseinheit vor, an oder nach dem Zeitpunkt starten, zu welchem die Transporteinheit stoppt.

Die Versorgung der Transporteinheit kann dabei beispielsweise über die bereits beschriebene energetische Kopplung zwischen einer Sendespule und einer Empfangsspule erfolgen.

Besonders vorteilhaft ist dabei, dass somit ein geregelter Prozessablauf generiert werden kann, beispielsweise innerhalb einer Aseptic-Fill-Finish-Produktionsanlage zur Durchführung eines Aseptic-Fill-Finish-Verfahrens. Vorteilhaft ist zudem, dass somit beispielsweise kontinuierliche Verfahrensabläufe mit schnellen Durchlauf- und/oder Taktzeiten generiert werden können.

Insbesondere kann zumindest ein Gebinde über einen auf der Funktionseinheit sitzenden Antrieb einer Füllposition, vorzugsweise einer Füllnadel zum Befüllen, und/oder einer Position zum Verschließen des Gebindes angenähert werden. Somit kann das Gebinde und das abzufüllende vorzugsweise pharmazeutische Erzeugnis über die Annäherung der Funktionseinheit der Transporteinheit an die Prozesseinheiten beispielsweise von einem Halbfabrikat zu einem Endprodukt verarbeitet werden.

Bei einer weiteren vorteilhaften Ausgestaltung kann vorgesehen sein, dass die Versorgung der Transporteinheit simultan zu einer Bewegung der Transporteinheit stattfindet.

Besonders vorteilhaft ist dabei, dass somit beispielsweise Prozessabläufe, die von der Transporteinheit beispielsweise über die elektrische Antriebseinheit durchgeführt werden, zur Versorgung der Antriebseinheit nicht unterbrochen werden müssen.

Bei einer weiteren vorteilhaften Ausgestaltung kann vorgesehen sein, dass die Transporteinheit über alle Sektoren der Stator-Anordnung versorgt wird.

Besonders vorteilhaft ist dabei, dass somit eine kontinuierliche Energieübertragung realisiert werden kann. Somit kann beispielsweise auf eine elektrische Speichereinheit verzichtet werden. Vorteilhaft ist zudem, dass somit beispielsweise verhindert werden kann, einen Prozessablauf, beispielsweise aufgrund eines Signals des Sensors aufgrund einer Unterschreitung eines minimalen Ladezustands, zu unterbrechen.

Bei einer weiteren vorteilhaften Ausgestaltung kann vorgesehen sein, dass Daten eines oder des bereits erwähnten Sensors über eine Datenverarbeitungsvorrichtung verarbeitet und/oder über eine drahtlose Kommunikationseinheit kommuniziert werden.

Dabei kann beispielsweise vorgesehen sein, dass die drahtlose Kommunikationseinrichtung ebenfalls energetisch versorgt wird.

Alternativ oder zusätzlich sind zur Lösung der genannten Aufgabe erfindungsgemäß die Merkmale des nebengeordneten, auf eine Verwendung gerichteten Anspruchs vorgesehen. Insbesondere wird somit zur Lösung der genannten Aufgabe eine Verwendung einer Energieübertragung an eine magnetisch levitierbare Transporteinheit und/oder einer Energiespeicherung auf einer magnetisch levitierbaren Transporteinheit, insbesondere eine bereits erwähnte und/oder beanspruchte magnetisch levitierbaren Transporteinheit, bei einem Aseptic-Fill-Finish-Verfahren und/oder bei einer Aseptic-Fill-Finish-Produktionsanlage vorgeschlagen.

Bei einem Aseptic-Fill-Finish-Verfahren wird beispielsweise ein pharmazeutisches Erzeugnis in einem letzten Verarbeitungsschritt unter aspetischen Bedingungen umgefüllt, um anschließend die abgabebereite Portionierung beispielsweise in Behältnissen, insbesondere Vials, in Spritzen oder in anderen Abgabevorrichtungen bereitzustellen.

Bei einer Aseptic-Fill-Finish-Produktionsanlage handelt es sich beispielsweise um eine Anlage, in der ein Aseptic-Fill-Finish-Verfahren durchgeführt werden kann.

Dabei kann beispielsweise vorgesehen sein, dass die Energieübertragung dazu genutzt wird, einen oder mehrere auf der magnetisch levitierbaren Transporteinheit positionierbaren elektrischen Verbraucher und/oder elektrische Speichereinheit energetisch zu versorgen.

Der elektrische Verbraucher kann dabei beispielsweise eine Temperiervorrichtung, eine Antriebseinheit, ein motorisch angetriebenes Teil, eine Waage, ein Partikelzähler, ein Dekontaminationssystem, eine Crimpingvorrichtung mit einer bewegbaren Crimpingscheibe, eine antreibbare Hubvorrichtung und/oder eine bewegbare Aufnahme für ein Nährmediumsträger sein.

Besonders vorteilhaft ist dabei, dass über die Energieübertragung die Verarbeitungsschritte des Aseptic-Fill-Finish-Verfahrens unter aseptischen Bedingungen automatisiert und effizienter durchgeführt werden können.

Alternativ oder zusätzlich sind zur Lösung der genannten Aufgabe erfindungsgemäß die Merkmale des nebengeordneten, auf eine Verwendung gerichteten Anspruchs vorgesehen. Insbesondere wird somit zur Lösung der genannten Aufgabe eine Verwendung einer Energieübertragung an eine magnetisch levitierbare Transporteinheit und/oder einer Energiespeicherung auf einer magnetisch levitierbaren Transporteinheit, insbesondere eine bereits erwähnte und/oder beanspruchte magnetisch levitierbaren Transporteinheit, zur Betätigung einer elektrischen Funktionseinheit, insbesondere eines über ein vorzugsweise motorisch angetriebenes Greifelement zur Übergabe von zumindest einem Behälter von einer magnetisch levitierbaren Transporteinheit an eine andere magnetisch levitierbare Transporteinheit, vorgeschlagen.

Besonders vorteilhaft ist dabei, dass somit beispielsweise unterschiedliche Verfahrensprozesse, beispielsweise Befüllen des Behälters und anschließendes Verschließen des Behälters, automatisiert durchgeführt und somit beispielsweise Durchlaufzeiten reduziert werden können.

Alternativ oder zusätzlich wird erfindungsgemäß eine Verwendung einer Energieübertragung an eine magnetisch levitierbare Transporteinheit und/oder einer Energiespeicherung auf einer magnetisch levitierbaren Transporteinheit, insbesondere eine bereits erwähnte und/oder beanspruchte magnetisch levitierbare Transporteinheit, zur Betätigung einer elektrischen Funktionseinheit, insbesondere eines über ein vorzugsweise motorisch angetriebenes Greifelement zur Übergabe von zumindest einem Behälter von einer magnetisch levitierbaren Transporteinheit an eine Prozesseinheit.

Besonders vorteilhaft ist dabei, dass der Behälter somit beispielsweise direkt an eine Prozesseinheit zur Weiterverarbeitung übergeben werden kann.

Alternativ oder zusätzlich wird erfindungsgemäß eine Verwendung einer Energieübertragung an eine magnetisch levitierbare Transporteinheit und/oder einer Energiespeicherung auf einer magnetisch levitierbaren Transporteinheit, insbesondere eine bereits erwähnte und/oder beanspruchte magnetisch levitierbaren Transporteinheit, zur Betätigung einer elektrischen Funktionseinheit, insbesondere eines über ein vorzugsweise motorisch angetriebenes Greifelement zur Übergabe von zumindest einem Behälter von einer Prozesseinheit an eine Prozesseinheit.

Dabei ist besonders vorteilhaft, dass, beispielsweise nach einer Übergabe des Behälters von einer magnetisch levitierbaren Transporteinheit an eine Prozesseinheit eine direkte Übergabe an eine nächste Prozesseinheit, beispielsweise zur endgültigen Bearbeitung des Behälters, erfolgen kann. Somit kann beispielsweise ein Automatismus realisiert werden, bei dem die Transporteinheit beispielsweise nach der Übergabe an die Prozesseinheit direkt weitere Verfahrensschritte durchführen kann.

Die Funktionseinheit kann auch eine aktive Stabilisierungseinrichtung aufweisen, beispielsweise ein Gimbal oder eine motorisierte kardanische Aufhängung, um Stöße auf ein transportierte Gut, beispielsweise einen befüllten Behälter, zu vermeiden oder zumindest zu vermindern.

Die Funktionseinheit kann auch bei einer weiteren Ausgestaltung ein optische System, beispielsweise eine Inspektionskamera, aufweisen. Auch hier ist der Einsatz einer Stabilisierungseinrichtung von Vorteil.

Die Erfindung wird nun anhand von Ausführungsbeispiel näher beschrieben, ist noch nicht auf die Ausführungsbeispiel beschränkt. Weitere Ausführungsbeispiel ergeben sich durch Kombination der Merkmale einzelner oder mehrerer Ansprüche untereinander und/oder mit einzelnen oder mehreren Merkmalen des Ausführungsbeispiels.

Es zeigt in jeweils stark vereinfachter Form
- Fig. 1: eine schematische, zweidimensionale Darstellung einer Transportvorrichtung mit einer magnetisch levitierbaren Transporteinheit mit einer Empfangsspule und einer Stator-Anordnung mit Sendespule,
- Fig. 2: eine schematische, zweidimensionale Darstellung einer weiteren erfindungsgemäßen Transportvorrichtung mit einer mit der Empfangsspule der Transporteinheit verbundenen elektrischen Antriebseinheit und einem Schwingkreis,
- Fig. 3: eine schematische, zweidimensionale Darstellung einer weiteren erfindungsgemäßen Transporteinheit mit Elektromotor,
- Fig. 4: eine schematische, zweidimensionale Darstellung einer weiteren erfindungsgemäßen Transporteinheit mit elektrischer Speichereinheit,
- Fig. 5: eine schematische, zweidimensionale Darstellung einer weiteren erfindungsgemäße Transporteinheit mit elektrischer Antriebseinheit und elektrischer Speichereinheit,
- Fig. 6: eine schematische, zweidimensionale Darstellung der Transporteinheit nach Fig. 5 mit einem Sektor der Stator-Anordnung nach Fig. 1,
- Fig. 7: eine schematische, zweidimensionale Darstellung einer weiteren erfindungsgemäßen Transporteinheit mit Roboterarm und Greifelement,
- Fig. 8: eine schematische, zweidimensionale Darstellung einer weiteren erfindungsgemäßen Transporteinheit mit einer bewegbaren Behälteraufnahme,
- Fig. 9: eine schematische, zweidimensionale Darstellung einer weiteren erfindungsgemäßen Transporteinheit mit einem Partikelzähler,
- Fig. 10: eine schematische, zweidimensionale Darstellung einer weiteren erfindungsgemäßen Transporteinheit mit einem Vorratsbehälter und einer Abgabeeinheit,
- Fig. 11: eine schematische, zweidimensionale Darstellung einer weiteren erfindungsgemäßen Transporteinheit mit einem Dekontaminationssystem,
- Fig. 12: eine schematische, zweidimensionale Darstellung einer weiteren erfindungsgemäßen Transporteinheit mit einer Crimpingvorrichtung mit Crimpingscheibe,
- Fig. 13: eine schematische, zweidimensionale Darstellung einer weiteren erfindungsgemäßen Transporteinheit mit einer antreibbaren Hubvorrichtung,
- Fig. 14: eine schematische, zweidimensionale Darstellung einer weiteren erfindungsgemäßen Transporteinheit mit zwei Transporteinheiten, auf denen eine antreibbare Hubvorrichtung mit Behälter und einer von einem Roboter gegriffenen Spritze ausgebildet ist.
- Fig. 15: eine schematische, zweidimensionale Darstellung einer weiteren erfindungsgemäßen Transporteinheit mit Nährmediumsträger und Nährmedium,
- Fig. 16: eine schematische, zweidimensionale Darstellung einer weiteren erfindungsgemäßen Transporteinheit mit Roboterarm, Nährmediumsträger und Nährmedium,
- Fig. 17: eine schmatische, zweidimensionale Darstellung der Transporteinheit nach Fig. 1 mit Gehäuse,
- Fig. 18: eine schematische, zweidimensionale Darstellung einer weiteren erfindungsgemäßen Transportvorrichtung mit drei Sektoren der Stator-Anordnung und zwei Transporteinheiten, wobei an allen Sektoren abschnittsweise Sendespulen ausgebildet sind,
- Fig. 19: eine schematische, zweidimensionale Darstellung einer weiteren erfindungsgemäßen Transportvorrichtung in einer Draufsicht, wobei die Sendespulen abschnittsweise und vollständig auf den Sektoren der Stator-Anordnung angeordnet sind,
- Fig. 20: eine schematische, zweidimensionale Darstellung einer weiteren erfindungsgemäßen Transportvorrichtung in einer Seitenansicht, wobei die Transportvorrichtung abschnittsweise innerhalb eines kontrollierten Raums ausgebildet ist und der Stator die Grenze zum Reinraum bildet,
- Fig. 21: eine schematische, zweidimensionale Darstellung einer weiteren erfindungsgemäßen Transportvorrichtung in einer Seitenansicht, wobei die gesamte Transportvorrichtung innerhalb eines kontrollierten Raums angeordnet ist,
- Fig. 22: eine schematische, zweidimensionale Darstellung einer weiteren erfindungsgemäßen Transportvorrichtung innerhalb eines kontrollierten Raums in einer Draufsicht,
- Fig. 23: eine schematische, zweidimensionale Darstellung einer weiteren erfindungsgemäßen Transportvorrichtung in einer Seitenansicht innerhalb eines kontrollierten Raums mit zusätzlicher Ladestation zur galvanischen Energieübertragung,
- Fig. 24: eine schematische, zweidimensionale Darstellung einer weiteren erfindungsgemäßen Transportvorrichtung, wobei die Transporteinheit und die Stator-Anordnung an einer vertikalen Ebene ausgebildet sind.
- Fig. 25: eine schematische, zweidimensionale Darstellung einer weiteren erfindungsgemäßen Transportvorrichtung einer Produktionsanlage mit einem Isolator, wobei von der Transporteinheit definierte Prozessabläufe durchgeführt werden.
- Fig. 26: eine schematische, zweidimensionale Darstellung einer weiteren erfindungsgemäßen Transportvorrichtung in einer Seitenansicht nach Fig. 20, wobei ein Behälter von einer Transporteinheit an eine andere Transporteinheit übergeben wird.

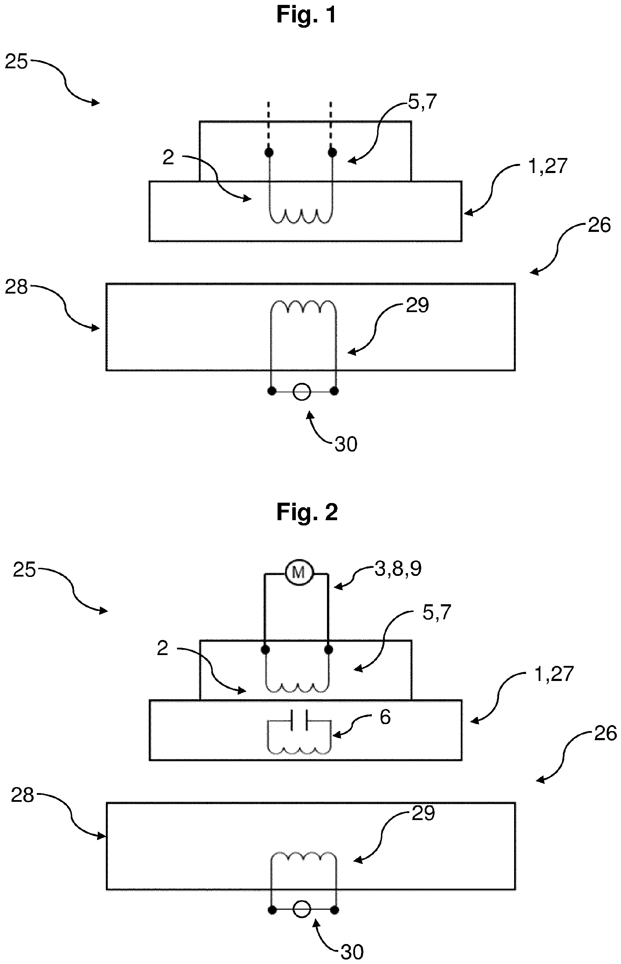

Fig. 1 zeigt eine im Ganzen mit 25 bezeichnete Transportvorrichtung mit einem Sektor 28 einer Stator-Anordnung 26 und einer magnetisch levitierbaren Transporteinheit 1, insbesondere Mover 27.

Die magnetisch levitierbare Transporteinheit 1 hat eine induktiv versorgbare elektrische Funktionseinheit 2. Die elektrische Funktionseinheit 2 hat hierbei eine Leistungsempfangseinheit 5, wobei die Leistungsempfangseinheit 5 als Empfangsspule 7 ausgebildet ist.

Die magnetisch levitierbare Transporteinheit 1 levitiert über dem Sektor 28 der Stator-Anordnung 26.

Der Sektor 28 der Stator-Anordnung 26 ist mit einer Sendespule 29 ausgebildet, worüber eine induktive Kopplung zwischen der magnetisch levitierbaren Transporteinheit 1 und dem Sektor 28 der Stator-Anordnung 26 ausbildbar ist.

Zur energetischen Kopplung bzw. zur Übertragung einer elektrischen Energie von der Sendespule 29 zu der Empfangsspule 7 ist die Sendespule 29 an einer Einspeiseeinheit 30 zur Einprägung eines frequenzstabilisierten und amplitudenkonstanten Stroms ausgebildet.

Fig. 2 zeigt ein weiteres Ausführungsbeispiel einer magnetisch levitierbaren Transportvorrichtung 1 mit einem zusätzlich an der Empfangsspule 7 der Transporteinheit 1 induktiv angekoppelten Schwingkreis 6. Funktionell und/oder konstruktiv zu dem vorhergehenden Ausführungsbeispiel gleichartige oder identische Bauteile und Funktionseinheiten sind mit denselben Bezugszeichen bezeichnet und nicht noch einmal gesondert beschrieben.

An der Empfangsspule 7 der magnetisch levitierbaren Transporteinheit 1 ist ein elektrischen Verbraucher 3, welcher in diesem Ausführungsbeispiel eine Antriebseinheit 8, insbesondere ein Elektromotor 9 ist, angeschlossen.

Es kann somit gesagt werden, dass die elektrische Funktionseinheit 2 der magnetisch levitierbaren Transporteinheit 1 eine Leistungsempfangseinheit 5 mit einem induktiv koppelbaren Schwingkreis 6 und einem elektrischen Verbraucher 3 hat.

Über den mit der Empfangsspule 7 gekoppelten Schwingkreis 6 ist somit eine resonant induktive Kopplung zwischen der Transporteinheit 1 und der Stator-Anordnung 26 realisiert.

Die Antriebseinheit 8 wird somit von dem Sektor 28 der Stator-Anordnung 26 über die Empfangsspule 7 der Transporteinheit 1 versorgt.

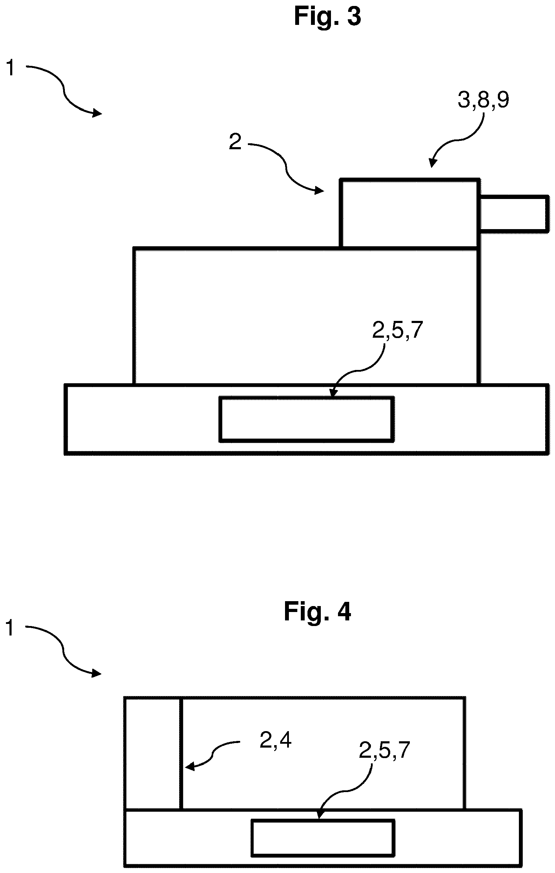

Fig. 3 zeigt ein weiteres Ausführungsbeispiel der magnetisch levitierbaren Transporteinheit 1 nach Fig. 2, wobei die elektrische Antriebseinheit 8 und die Leistungsempfangseinheit 5, die weiterhin als Empfangsspule 7 ausgebildet ist, als abstrakt vereinfachte zweidimensionale Modelle dargestellt sind.

Fig. 4 zeigt ein weiteres Ausführungsbeispiel der magnetisch levitierbaren Transporteinheit 1, wobei die elektrische Funktionseinheit 2 in diesem Ausführungsbeispiel zusätzlich zur Empfangsspule 7 eine elektrische Speichereinheit 4 hat, die über die energetische bzw. induktive Kopplung aufladbar ist.

Es kann somit gesagt werden, dass die elektrische Funktionseinheit 2 der magnetisch levitierbaren Transporteinheit 1 eine Leistungsempfangseinheit 5 und eine elektrische Speichereinheit 4 hat.

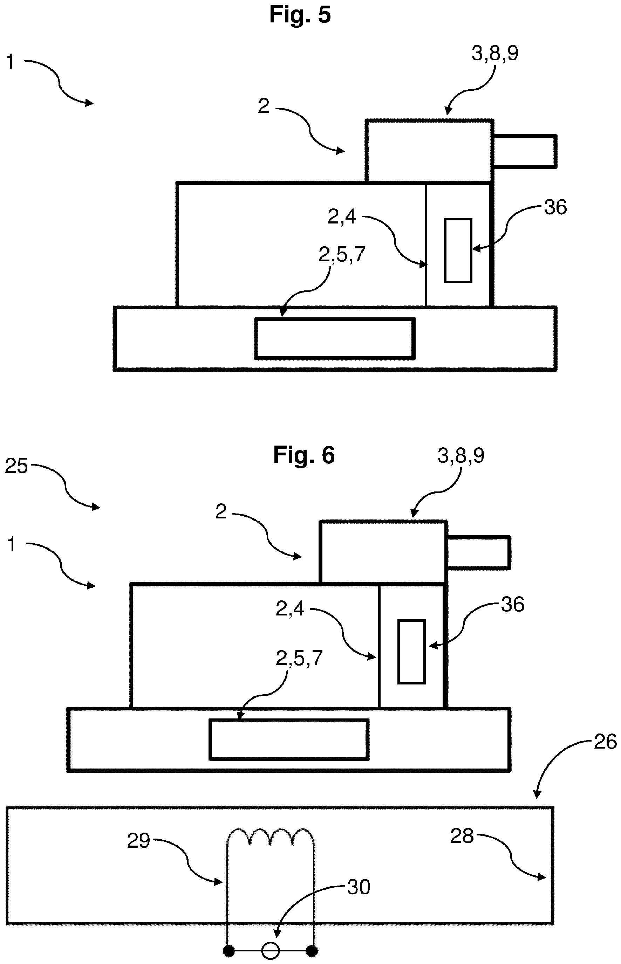

Das Ausführungsbeispiel nach Fig. 5 unterscheidet sich von den vorhergehenden Ausführungsbeispielen zumindest dadurch, dass der Elektromotor 9 mit der elektrischen Speichereinheit 4 gekoppelt ist. Zusätzlich ist die elektrische Speichereinheit 4 der Transporteinheit 1 mit einem Sensor 36 ausgebildet, der einen Zustand, insbesondere einen Ladezustand, der elektrischen Speichereinheit 4 erfasst.

Es kann somit gesagt werden, dass die magnetisch levitierbare Transporteinheit 1 eine induktiv versorgbare elektrische Funktionseinheit 2 hat, wobei die elektrische Funktioneinheit 2 einen elektrischen Verbraucher 3 und eine elektrische Speichereinheit 4 und eine Leistungsempfangseinheit 5 hat.

Fig. 6 zeigt die gesamte Transportvorrichtung 25 mit der magnetisch levitierbaren Transporteinheit 1 nach Fig. 5. Der Sektor 28 der Stator-Anordnung ist gemäß Fig. 1 und Fig. 2 mit der Sendespule 29 ausgebildet und an einer Einspeiseeinheit 30 angeschlossen.

Die Sendespule 29 erzeugt dabei ein elektromagnetisches (Wechsel-)Feld, wodurch wiederum zwischen der Sendespule 29 und der Empfangsspule 7 der Transporteinheit aufgrund einer Gegeninduktion die elektrische Energie von der Sendespule 29 an die Empfangsspule 7 übertragen wird. In diesem Ausführungsbeispiel wird die übertragene elektrische Energie dazu genutzt, die elektrische Speichereinheit 4 aufzuladen und die elektrische Antriebseinheit 8 bzw. den Elektromotor 9 anzutreiben.

Somit ist realisiert, dass die elektrische Antriebseinheit 8 und die elektrische Speichereinheit 4 der Transporteinheit 1 von dem Sektor 28 der Stator-Anordnung 26 versorgt wird.

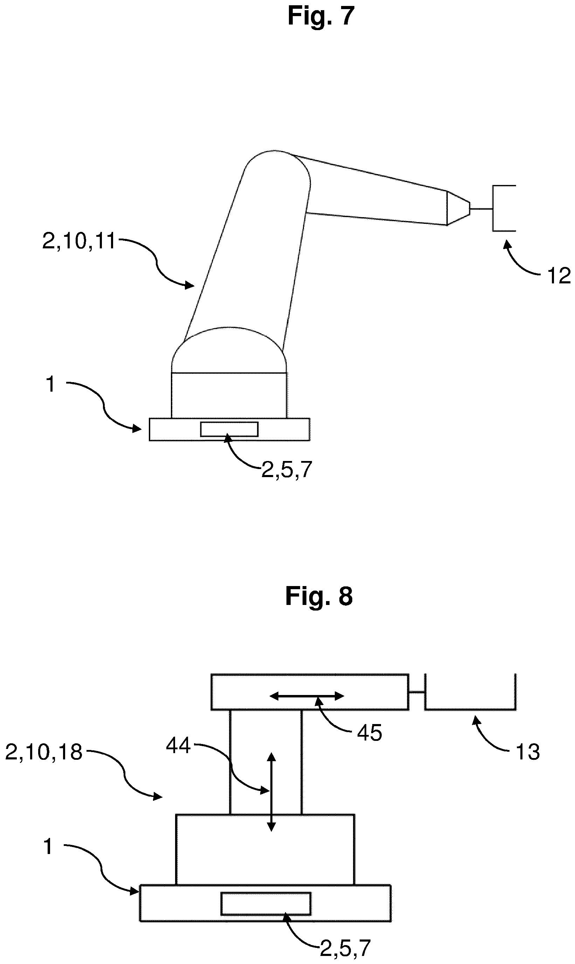

Die folgenden Figuren, die die Fig. 7 bis Fig. 16 betreffen, zeigen verschiedene Ausführungsbeispiele mit auf der magnetisch levitierbaren Transporteinheit 1 ausgebildeten elektrischen Funktionseinheiten 2, die mittels der energetischen Kopplung zwischen der Sendespule 29 des Sektors 28 der Stator-Anordnung 26 und der Empfangsspule 7 der Transporteinheit 1 betrieben werden. Funktionell und/oder konstruktiv gleichartige oder identische Bauteile und Funktionseinheiten sind mit denselben Bezugszeichen versehen und nicht noch einmal gesondert beschrieben.

Fig. 7 zeigt ein Ausführungsbeispiel der magnetisch levitierbaren Transporteinheit 1, wobei die Transporteinheit 1 mit einem motorisch angetrieben Teil 10 ausgebildet ist, welches über die energetische Kopplung zwischen der Empfangsspule 7 und der Sendespule 29, die in den Fig. 1, 2, 6 gezeigt ist, angetrieben wird.

Das motorisch angetriebene Teil 10 ist hierbei ein Roboter 11 mit einem Greifelement 12.

Fig. 8 zeigt ein weiteres Ausführungsbeispiel der magnetisch levitierbaren Transporteinheit 1 mit einem motorisch angetriebenen Teil 10, welches als antreibbare Hubvorrichtung 18 mit bewegbarer Behälteraufnahme 13 ausgebildet ist. Die Bewegung Hubvorrichtung 18 und der Behälteraufnahme 13 wird dabei ebenfalls über die energetische Kopplung generiert. Somit ist eine vertikale Bewegung 44 und/oder eine horizontale Bewegung 45 möglich.

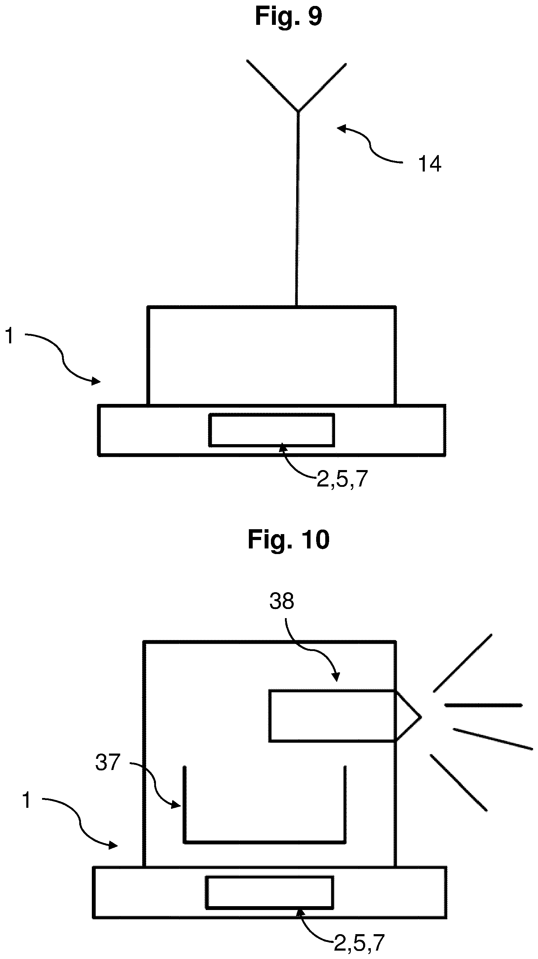

Fig. 9 zeigt ein weiteres Ausführungsbeispiel der magnetisch levitierbaren Transporteinheit 1, die mit einem Partikelzähler 14 ausgebildet ist.

Fig. 10 unterscheidet sich von den Fig. 7 bis 9 dadurch, dass die Transporteinheit 1 einen Vorratsbehälter 37 und eine Abgabeeinheit 38 trägt.

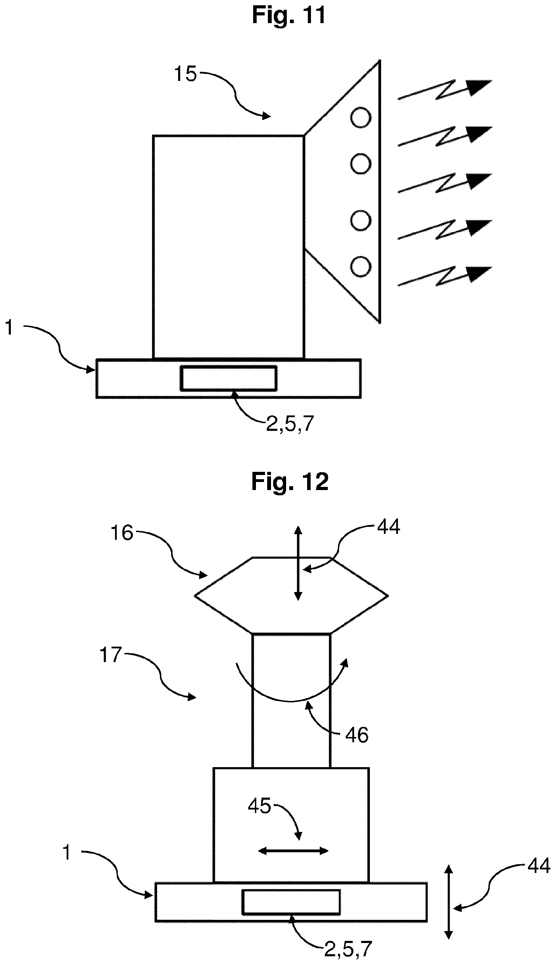

Fig. 11 zeigt ein weiteres Ausführungsbeispiel der magnetisch levitierbaren Transporteinheit 1 mit einem auf der Transporteinheit 1 ausgebildeten Dekontaminationssystem 15.

Das Dekontaminationssystem 15 wird gemäß den vorhergehenden Ausführungsbeispielen energetisch versorgt.

Fig. 12 zeigt im Unterschied zu den vorhergehenden Ausführungsbeispielen eine auf der Transporteinheit 1 ausgebildete bewegbare Crimpingvorrichtung 17 mit Crimpingscheibe 16. Die Crimpingvorrichtung 17 wird dabei über die energetische Kopplung angetrieben, wodurch Rotationsbewegungen 46, vertikale Bewegungen 44 und/oder horizontale Bewegungen 45 der Crimpingvorrichtung 17 und/oder der Crimpingscheibe 16 realisierbar sind.

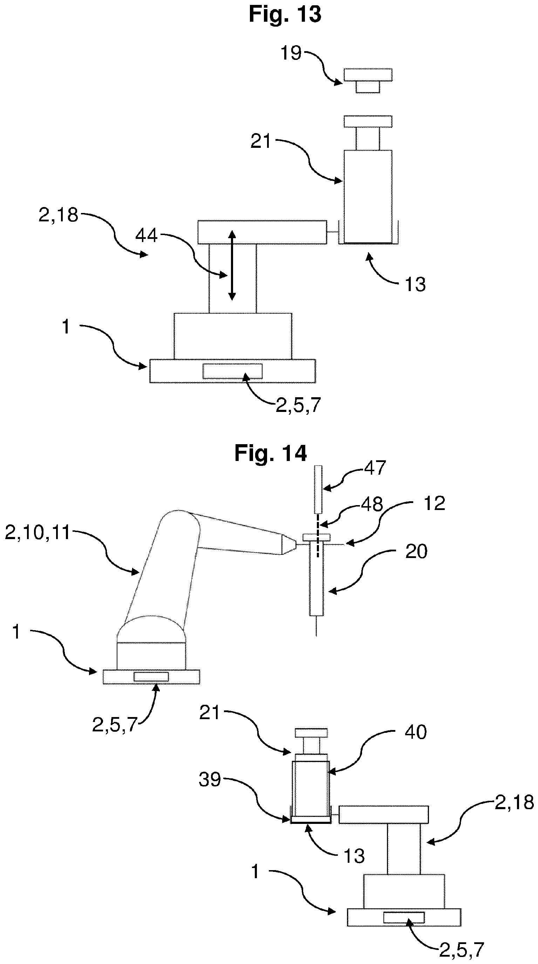

Fig. 13 zeigt ein weiteres Ausführungsbeispiel der magnetisch levitierbaren Transporteinheit 1, die mit einer antreibbaren Hubvorrichtung 18 ausgebildet ist, mit Behälteraufnahme 13 und einem auf der Behälteraufnahme 13 positionierten Behälter 21.

Die Hubvorrichtung 18 ist dabei dazu ausgebildet, über die Energie der energetischen Kopplung einen Stopfen 19 über eine vertikale Bewegung 44 anzufahren, wodurch der Behälter 21 wiederum verschlossen wird.

Fig. 14 zeigt ein weiteres Ausführungsbeispiel mit zwei seitlich und höhenversetzten magnetisch leiviterbaren Transporteinheiten 1.

Eine Transporteinheit 1 trägt die Hubvorrichtung 18 mit Behälter 21 nach Fig. 13. Die Behälteraufnahme 13 ist zusätzlich mit einer Waage 39 ausgebildet. Um den Behälter 21 ist eine Temperiereinrichtung 40 ausgebildet.

Eine weitere Transporteinheit 1 trägt ein motorisch angetriebenes Teil 10, welches auch in diesem Ausführungsbeispiel als Roboter 11 mit Greifelement 12 ausgebildet ist. Über das Greifelement 12 wird eine Spritze 20 gegriffen, die von der Hubvorrichtung 18 zur Befüllung des Behälters 21 mit einer Flüssigkeit 48, welche zuvor über eine Füllnadel 47 in die Spritze 20 gefüllt wurde, angefahren wird. Die Flüssigkeit 48, die sich anschließend in dem Behälter 21 befindet, wird dabei über die Temperiereinrichtung 40 auf einer definierten Temperatur gehalten, wobei ein Gewicht des Behälters 21 vor- und/oder nach und/oder während der Befüllung mit der Waage 39 ermittelt wird.

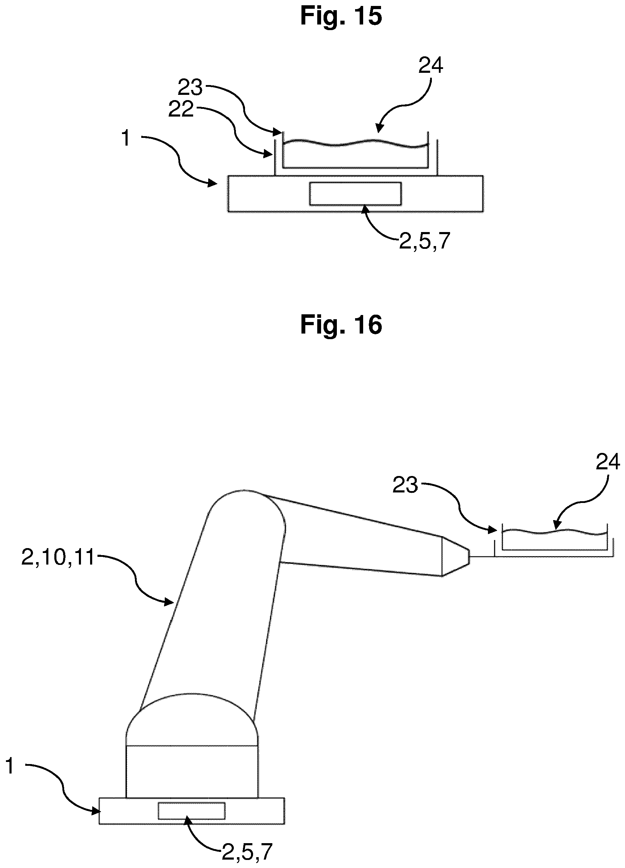

Fig. 15 zeigt ein weiteres Ausführungsbeispiel der magnetisch levitierbaren Transporteinheit 1 mit einer Aufnahme 22 für ein Nährmediumsträger 23, in dem ein Nährmedium 24 präsentiert wird, ausgebildet ist.

Fig. 16 zeigt ein weiteres Ausführungsbeispiel der magnetisch levitierbaren Transporteinheit 1 mit Roboter 11, der den Nährmediumsträger 23, in dem das Nährmedium 24 präsentiert wird, trägt.

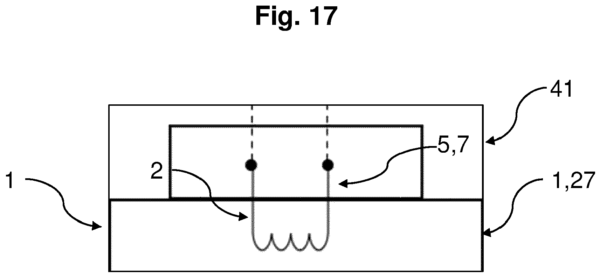

Fig. 17 zeigt die magnetisch levitierbare Transporteinheit 1 aus Fig. 1, wobei die Transporteinheit 1 und die Empfangsspule 7 von einem abgedichteten Gehäuse 41 umgeben und somit vor Verunreinigungen geschützt ist.

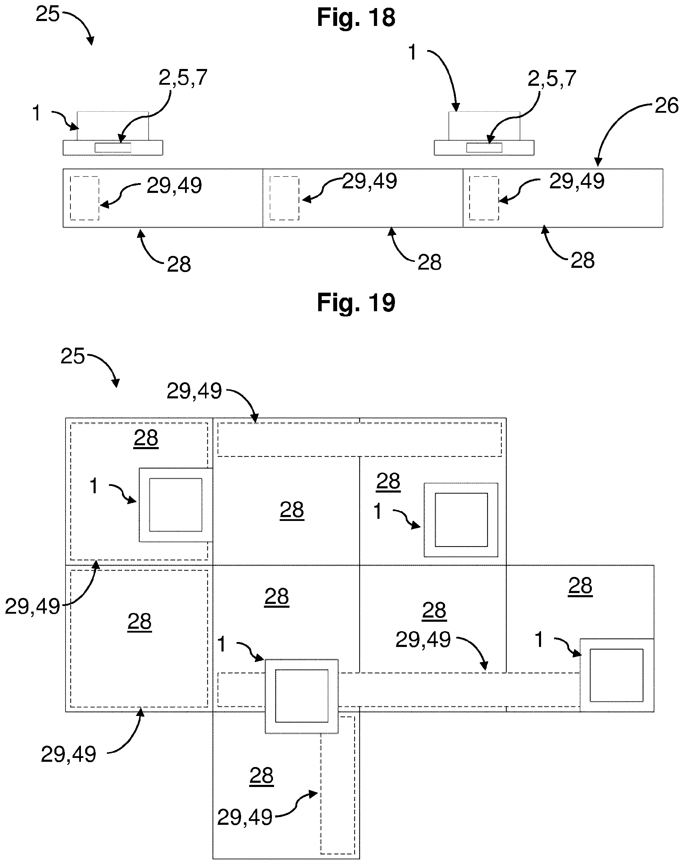

Fig. 18 zeigt ein Ausführungsbeispiel einer Anordnung der Transportvorrichtung 25. Die Stator-Anordnung 26 hat drei Sektoren 28, wobei jeder Sektor 28 abschnittsweise, in diesem Ausführungsbeispiel linksseitig eines jeden Sektors 28, mit einer Sendespule 29 ausgebildet ist, wobei die Sendespulen 29 wiederum die Energieübertragungsbereiche 49 bilden. Die energetische Kopplung ist somit dazu ausgebildet, eine kontinuierliche Energieversorgung der Transporteinheit 1 in den linksseitigen Energieübertragungsbereichen 49 aufrechtzuerhalten.

Es kann somit gesagt werden, dass alle Sektoren 28 der Stator-Anordnung 26 mit einer Sendespule 29 ausgebildet sind und die Transporteinheit 1 über alle Sektoren 28 der Stator-Anordnung 26 abschnittsweise in den jeweiligen Energieübertragungsbereichen 49 versorgt wird.

Zu erkennen sind weiterhin, dass die zwei über den Sektoren 28 magnetisch levitierenden und verfahrbaren Transporteinheiten 1 mit jeweils einer Empfangsspule 7 ausgebildet sind. Da alle Sektoren 28 der Stator-Anordnung mit einer Sendespule 23 und jede Transporteinheit 1 mit einer Empfangsspule 7 ausgebildet ist, ist eine zu einer Bewegung der Transporteinheit 1 simultane Versorgung der Transporteinheit 1 über die kontinuierliche energetische Kopplung gewährleistet.

Fig. 19 zeigt ein weiteres Ausführungsbeispiel einer Anordnung der Transportvorrichtung 25 mit acht Sektoren 28 der Stator-Anordnung 26 und vier Transporteinheiten 1 in einer Draufsicht. Im Unterschied zu dem vorhergehenden Ausführungsbeispiel sind die Sendespulen 29 und somit auch die Energieübertragungsbereiche 49 teilweise abschnittsweise über mehrere Sektoren 28 und teilweise vollständig auf einem Sektor 28 der Stator-Anordnung 26 ausgebildet.

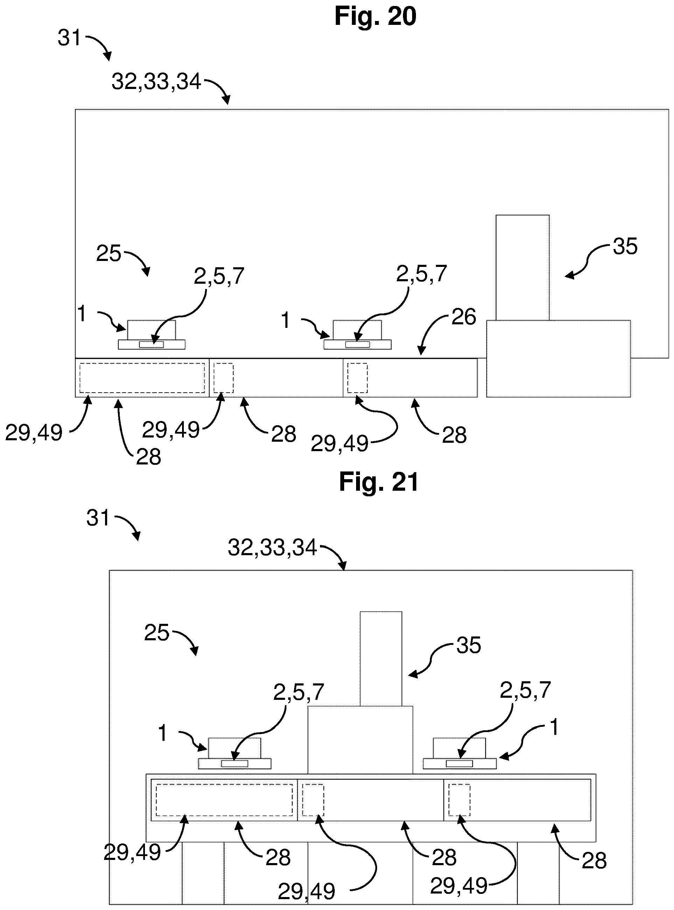

Fig. 20 zeigt ein Ausführungsbeispiel einer Produktionsanlage 31 mit einem weiteren Ausführungsbeispiel einer Transportvorrichtung 25, wobei die Transporteinheit 1, die gemäß der vorhergehenden Ausführungsbeispiele mit der Empfangsspule 7 ausgebildet ist, in einem kontrollierten Raum 32 angeordnet ist. Der kontrollierte Raum 32 wird von einem Isolator 33 oder einem RABS 34 gebildet.

Außerhalb des kontrollierten Raums 32 ist die Stator-Anordnung 26 mit drei Sektoren 28 ausgebildet, wobei jeder Sektor 28 eine Sendespule 28 hat, über die die energetische Kopplung mit der Transporteinheit 1, gemäß den vorhergehenden Ausführungsbeispielen, generiert wird. Die Sendespulen 29 und somit auch die Energieübertragungsbereiche 49 sind dabei an zwei Sektoren 28 lediglich abschnittsweise und an einem Sektor 28 vollständig über die gesamte Fläche ausgebildet. Hierbei erfolgt eine Aufladung der Transporteinheit 1 über die gesamte Fläche des Sektor 28, während die Transporteinheit 1 an den beiden anderen Sektoren 28, auf denen die Sendespule 29 nur abschnittsweise ausgebildet sind, nur dann aufgeladen wird, wenn sich die Transporteinheit 1 mit der Empfangsspule 7 darüber befindet.

Ferner ist eine Prozesseinheit 35 schematisch dargestellt, die sich abschnittsweise in den kontrollierten Raum 32 erstreckt.

Da der Sektor 28, an dem rechtsseitig direkt die Prozesstation 35 angrenzt, lediglich abschnittsweise linksseitig mit einer Sendespule 29 ausgebildet ist, erfolgt die energetische Kopplung beabstandet zu der Prozesseinheit 35 und nicht direkt an der Prozesseinheit 35.

Das Ausführungsbeispiel nach Fig. 21 unterscheidet sich von dem vorhergehenden Ausführungsbeispiel dadurch, dass nicht nur die Transporteinheit 1, sondern die gesamte Transportvorrichtung 25 und die Prozesseinheiten 35 innerhalb des kontrollierten Raums 25, aber gekapselt und/oder räumlich getrennt ist/sind.

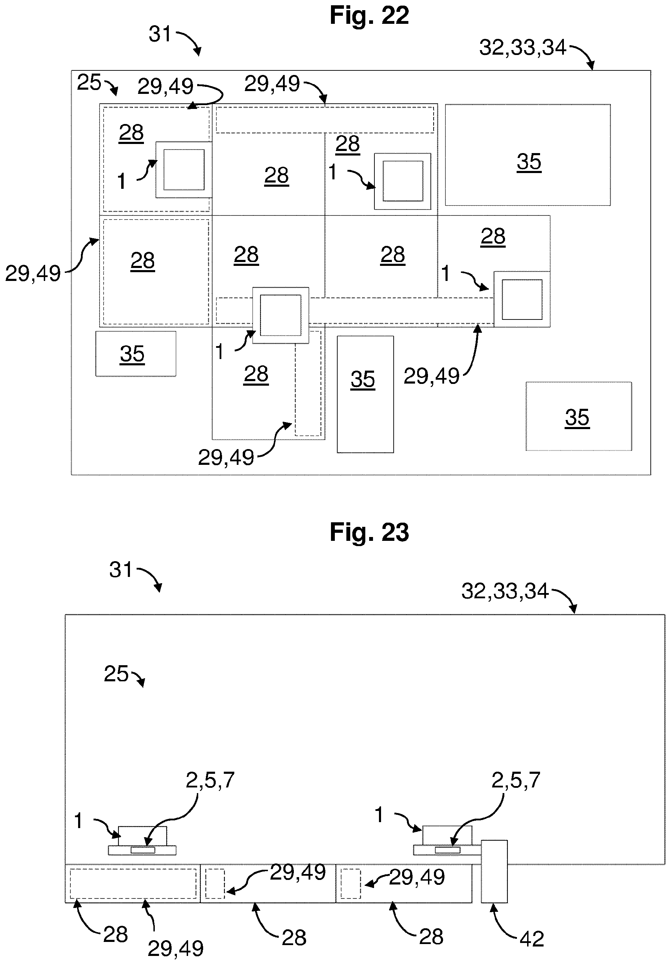

Fig. 22 zeigt ein weiteres Ausführungsbeispiel einer Produktionsanlage 31 mit einem kontrollierten Raum 32 und 8 Sektoren 28. Aufgrund der Ausbildung der Sendespulen 29 der Sektoren 28 bzw. aufgrund der Energieübertragungsbereiche 49 erfolgt die energetische Kopplung an den Prozesseinheiten 35 und beabstandet zu den Prozesseinheiten 35.

Fig. 23 zeigt ein weiteres Ausführungsbeispiel einer Produktionsanlage 31 nach Fig. 20, wobei die Transporteinheit 1 zusätzlich über galvanische Kontakte an einer Ladestation 42 energetisch versorgt wird.

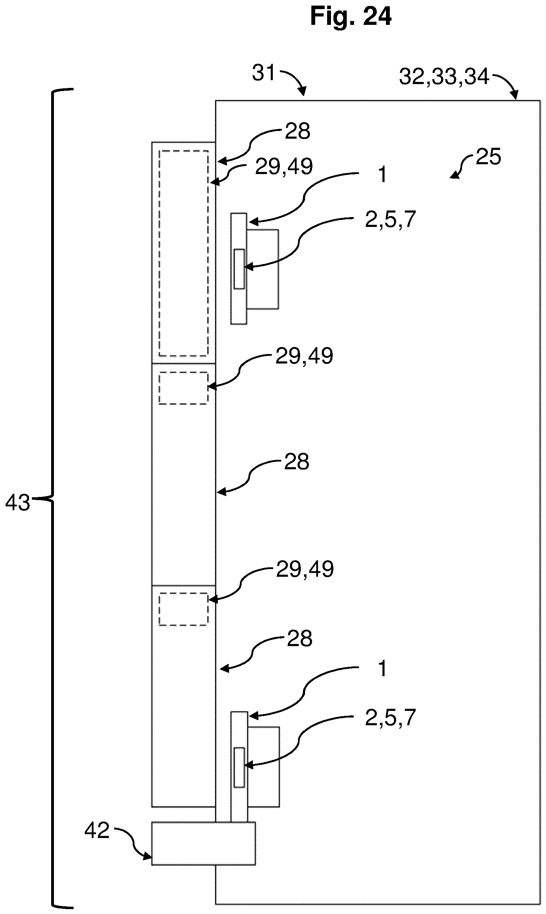

Fig. 24 zeigt ein weiteres Ausführungsbeispiel einer Produktionsanlage 31 nach Fig. 23, mit dem wesentlichen Unterschied, dass die Sektoren 28 der Stator-Anordnung 26 auf einer vertikalen Ebene 43 angeordnet sind.

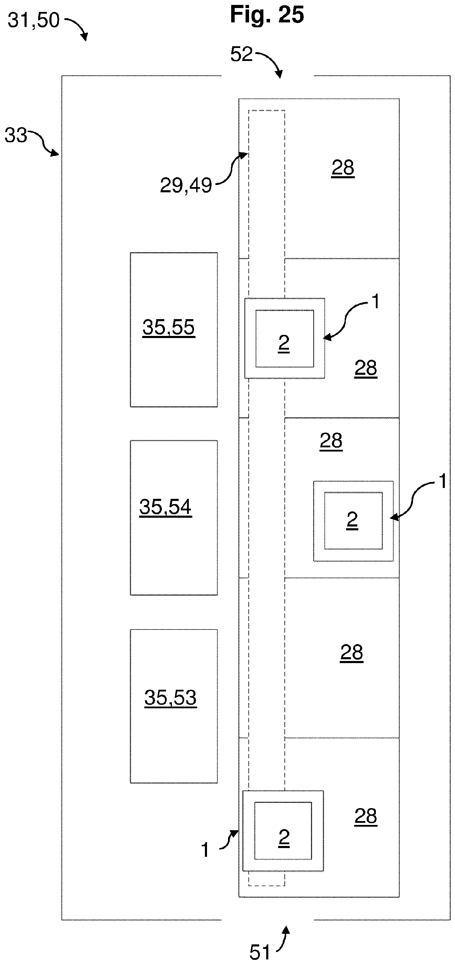

Fig. 25 zeigt ein weiteres Ausführungsbeispiel einer Produktionsanlage 31, die in diesem Ausführungsbeispiel als Aseptic-Fill-Finish-Produktionsanlage 50 ausgebildet ist mit insgesamt beispielhaft drei Prozesseinheiten 35 zur Durchführung eines Aseptic-Fill-Finish-Verfahrens innerhalb eines RABS 34 (vgl. Fig. 20) oder Isolators 33 mit einem Einlass 51 und einem Auslass 52.

Die Anzahl der Prozesseinheiten können in weiteren nicht gezeigten Ausführungsbeispiel variabel sein.

Die Sendespulen 29 sind hierbei über insgesamt beispielhaft fünf Sektoren 28 ausgebildet, wobei die dadurch entstehenden Energieübertragungsbereiche 49 direkt an die Prozesseinheiten 35 angrenzen. In weiteren Ausführungsbeispielen ist die Anzahl an Sektoren 28 ebenfalls variabel.

Die elektrische Funktionseinheit 2, die auf der Transporteinheit 1 platziert und in den Figuren 13 und 14 gezeigt ist, ist in diesem Ausführungsbeispiel die antreibbare Hubvorrichtung 18 mit Behälteraufnahme 13 und einem in der Behälteraufnahme 13 platzierten Behälter 21. Die Hubvorrichtung 18 wird dabei über die energetische Kopplung an den Energieübertragungsbereichen 49 angetrieben.

Der Behälter wird dabei zunächst an der Befüllstation 53 gemäß Fig. 14 mit einem pharmazeutischen Erzeugnis befüllt. In weiteren Ausführungsbeispielen kann die Befüllung differenziert zu dem Ausführungsbeispiel gemäß Fig. 14 erfolgen.

Die Behälteraufnahme 18 fährt dabei die von der Prozesseinheit 35 beispielsweise bereitgestellte Spritze 20 oder einen anderen Behälter 21 über eine vertikale Bewegung 44, beispielsweise analog zu dem Ausführungsbeispiel gemäß Fig. 13 an.

Anschließend kann auf eine Öffnung des Behälters 21 an der Verschlussstation 54 ein Verschlussdeckel oder ein anderes Verschlusselement aufgelegt werden. Manche Verschlussmittel werden anschließend zusätzlich noch mit einer Kappe versehen und von einer Crimpingvorrichtung 17 bzw. einer Crimpingscheibe 16 (gezeigt in Fig. 12) umgebördelt und der Behälter 21 somit verschlossen wird. In weiteren Ausführungsbeispielen wird der Behälter 21 von weiteren Verschlussvorrichtungen verschlossen.

Letztlich wird der Behälter von der Transporteinheit zu einer Inspektionsstation 55 transportiert. Hierbei wird überprüft, ob der Behälter 21 vollständig und aspetisch verschlossen ist und somit über den Auslass 52 entnommen werden kann.

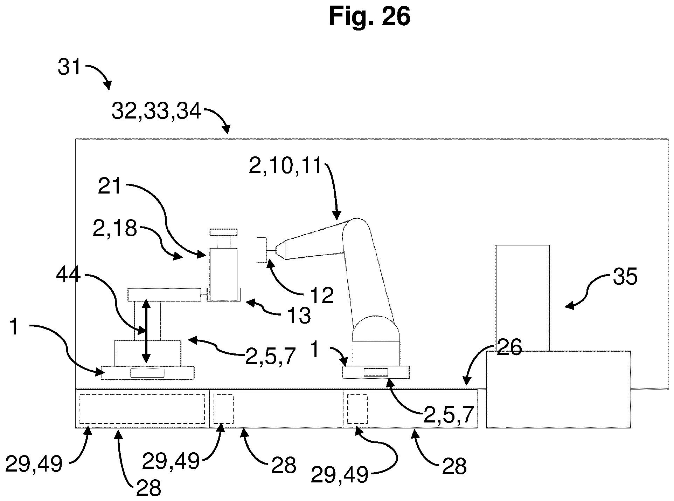

Fig. 26 zeigt ein weiteres Ausführungsbeispiel einer Produktionsanlage 31 mit einem weiteren Ausführungsbeispiel einer Transportvorrichtung 25 nach Fig. 20, wobei zwei magnetisch levitierbare Transporteinheiten 1 gezeigt sind. Dabei ist die linke magnetisch levitierbare Transporteinheit 1 mit einer antreibbaren Hubvorrichtung 18 mit Behälteraufnahme 13 und einem auf der Behälteraufnahme 13 positionierten Behälter 21. Die Hubvorrichtung ist dabei dazu ausgebildet, eine vertikale Bewegung 44 auszuführen. Somit ist es in diesem Ausführungsbeispiel möglich, den Behälter 21 an eine weitere magnetisch levitierbare Transporteinheit 1 (rechts) anzunähern. Die in dem Ausführungsbeispiel rechts gezeigte Transporteinheit ist dabei gemäß Fig. 7 mit einem motorisch angetriebenen Teil 10 ausgebildet. Somit kann der Behälter von der linken Transporteinheit 1 an die rechte Transporteinheit 1 übergeben werden. Es kann somit gesagt werden, dass die Energieübertragung dazu verwendet wird, eine elektrische Funktionseinheit 2 zur Übergabe eines Behälters 21 von einer Transporteinheit 1 an eine andere Transporteinheit 1 zu betätigen.

Erfindungsgemäß wird somit bei einer Transportvorrichtung 25, bestehend aus einer magnetisch levitierbaren Transporteinheit 1 und einer mit wenigstens einem Sektor 28 ausgebildeten Stator-Anordnung 26 vorgeschlagen, dass eine energetische, vorzugsweise induktive Kopplung zwischen einer an der Transporteinheit 1 ausgebildeten Empfangsspule 7 und einer Sendespule 29 eines Sektors der Stator-Anordnung 26 zur kontinuierlichen oder diskontinuierlichen Energieversorgung bzw. Energieübertragung, vorzugsweise innerhalb eines kontrollierten Raums 32, erfolgt.

### Bezugszeichenliste

- 1: Transporteinheit
- 2: Funktionseinheit
- 3: Verbraucher
- 4: Speichereinheit
- 5: Leistungsempfangseinheit
- 6: Schwingkreis
- 7: Empfangsspule
- 8: Antriebseinheit
- 9: Elektromotor
- 10: motorisch angetriebenes Teil
- 11: Roboter
- 12: Greifelement
- 13: Behälteraufnahme
- 14: Partikelzähler
- 15: Dekontaminationssystem
- 16: Crimpingscheibe
- 17: Crimpingvorrichtung
- 18: Hubvorrichtung
- 19: Stopfen
- 20: Spritze
- 21: Behälter
- 22: Aufnahme
- 23: Nährmediumsträger
- 24: Nährmedium
- 25: Transportvorrichtung
- 26: Stator-Anordnung
- 27: Mover
- 28: Sektor
- 29: Sendespule
- 30: Einspeiseeinheit
- 31: Produktionsanlage
- 32: Kontrollierter Raum
- 33: Isolator
- 34: RABS
- 35: Prozesseinheit
- 36: Sensor
- 37: Vorratsbehälter
- 38: Abgabeeinheit
- 39: Waage
- 40: Temperiervorrichtung
- 41: Gehäuse
- 42: Ladestation
- 43: vertikale Ebene
- 44: vertikale Bewegung
- 45: horizontale Bewegung
- 46: Rotationsbewegung
- 47: Füllnadel
- 48: Flüssigkeit
- 49: Energieübertragungsbereich
- 50: Aseptic-Fill-Finish-Produktionsanlage
- 51: Einlass
- 52: Auslass
- 53: Befüllstation
- 54: Verschlussstation
- 55: Inspektionsstation

## Patentansprüche

1. Magnetisch levitierbare Transporteinheit (1) mit einer vorzugsweise induktiv und/oder galvanisch versorgbaren elektrischen Funktionseinheit (2), wobei die elektrische Funktionseinheit (2) einen elektrischen Verbraucher (3) und/oder eine elektrische Speichereinheit (4) und/oder eine Leistungsempfangseinheit (5), insbesondere mit wenigstens einem induktiv koppelbaren Schwingkreis (6) und/oder mit wenigstens einem Kontaktpaar, hat.

2. Magnetisch levitierbare Transporteinheit (1) nach Anspruch 1, wobei die Transporteinheit (1) mit wenigstens einer Empfangsspule (7) ausgebildet ist und/oder wobei der elektrische Verbraucher (3) der magnetisch levitierbaren Transporteinheit (1) wenigstens eine Antriebseinheit (8), insbesondere ein Elektromotor (9), ist.

3. Magnetisch levitierbare Transporteinheit (1) nach einem der vorangehenden Ansprüche, wobei die elektrische Speichereinheit (4) eine austauschbare und/oder auf der Transporteinheit (1) fest installierte Batterie ist.

4. Magnetisch levitierbare Transporteinheit (1) nach einem der vorhergehenden Ansprüche, wobei die Transporteinheit (1) mit zumindest einem Sensor (36) ausgebildet ist, insbesondere der einen Zustand, insbesondere einen Ladezustand, der oder einer elektrischen Speichereinheit (4) erfassen, und/oder wobei die Transporteinheit (1) mit einer Temperiereinrichtung (40) ausgebildet ist und/oder wobei die Transporteinheit (1) mit einem motorisch angetriebenen Teil (10), beispielsweise einem Roboter (11) und/oder einem Greifelement (12) und/oder einer bewegbaren Behälteraufnahme (13) ausgebildet ist.

5. Magnetisch levitierbare Transporteinheit (1) nach einem der vorhergehenden Ansprüche, wobei die Transporteinheit (1) mit einer Waage (39) ausgebildet ist und/oder wobei die Transporteinheit (1) mit einer vorzugsweise drahtlosen Kommunikationseinheit und/oder mit einer Datenverarbeitungsvorrichtung ausgebildet ist und/oder wobei die Transporteinheit (1) mit einem Partikelzähler (14) ausgebildet ist.

6. Magnetisch levitierbare Transporteinheit (1) nach einem der vorhergehenden Ansprüche, wobei die Transporteinheit (1) dazu ausgebildet ist, wenigstens ein Dekontaminationssystem (15) aufzunehmen, und/oder wobei die Transporteinheit (1) wenigstens einen Vorratsbehälter (37) und/oder wenigstens eine Abgabeeinheit (38) trägt und/oder wobei die Transporteinheit (1) mit einer bewegbaren Crimpingscheibe (16) und/oder Crimpingvorrichtung (17) ausgebildet ist.

7. Magnetisch levitierbare Transporteinheit (1) nach einem der vorhergehenden Ansprüche, wobei die Transporteinheit (1) mit einer antreibbaren Hubvorrichtung (18) ausgebildet ist, insbesondere zum Anfahren eines Stopfens (19) und/oder einer Füllnadel (47) und/oder eines Verschlussdeckels, vorzugsweise mit einem auf der Hubvorrichtung (18) befindlichen Behälter (21), und/oder wobei die Transporteinheit (1) mit einer vorzugsweise bewegbaren Aufnahme (22) für ein Nährmediumsträger (23), in dem vorzugsweise ein Nährmedium (24) präsentierbar ist, ausgebildet ist und/oder wobei die Transporteinheit mit einem vorzugsweise abgedichteten Gehäuse (41) ausgebildet ist, insbesondere sodass die wenigstens eine Empfangsspule (7) der magnetisch levitierbaren Transporteinheit (1) vor Verunreinigungen geschützt ist.

8. Transportvorrichtung (25) mit einer Stator-Anordnung (26) und wenigstens einer magnetisch levitierbaren Transporteinheit (1), insbesondere Mover (27), und/oder nach einem der vorhergehenden Ansprüche, die auf wenigstens einem Sektor (28) der Stator-Anordnung (26) verfahrbar ist, **dadurch gekennzeichnet, dass** die magnetisch levitierbare Transporteinheit (1) mit wenigstens einer Empfangsspule (7) ausgebildet ist und dass wenigstens ein Sektor (28) der Stator-Anordnung (26) mit wenigstens einer Sendespule (29) ausgebildet ist, über die eine energetische, vorzugsweise berührungslose und/oder induktive, Kopplung ausbildbar ist.

9. Transportvorrichtung (25) nach dem vorhergehenden, auf eine Transportvorrichtung (25) gerichteten Anspruch, **dadurch gekennzeichnet, dass** über die energetische Kopplung eine vorzugsweise resonant induktive Kopplung und/oder eine kapazitive Kopplung zwischen der Transporteinheit (1) und der Stator-Anordnung (26) ausbildbar ist und/oder dass die Empfangsspule (7) der Transporteinheit (1) an einen Schwingkreis (6) gekoppelt ist.

10. Transportvorrichtung (25) nach einem der vorhergehenden, auf eine Transportvorrichtung (25) gerichteten Ansprüche, **dadurch gekennzeichnet, dass** wenigstens eine Sendespule (29) des wenigstens einen Sektors (28) der Stator-Anordnung (26) an eine Einspeiseeinheit (30) zur Einprägung eines frequenzstabilisierten und/oder amplitudenkonstanten Stroms ausgebildet ist und/oder dass über die energetische Kopplung eine vorzugsweise elektrische Speichereinheit (4) der Transporteinheit (1) aufladbar ist.

11. Transportvorrichtung (25) nach einem der vorhergehenden, auf eine Transportvorrichtung (25) gerichteten Ansprüche, **dadurch gekennzeichnet, dass** alle Sektoren (28) der Stator-Anordnung (26) mit wenigstens einer Sendespule (29) ausgebildet sind und/oder dass die energetische Kopplung dazu ausgebildet ist, eine kontinuierliche Energieversorgung der Transporteinheit (1) aufrechtzuerhalten und/oder dass die energetische Kopplung zwischen Transporteinheit (1) und Stator-Anordnung (26) auf einer vertikalen Ebene erfolgt.

12. Produktionsanlage (31), vorzugsweise zur Herstellung von pharmazeutischen Erzeugnissen, mit einem kontrollierten Raum (32), vorzugsweise einem Isolator (33) und/oder RABS (34) und darin angeordneter Transportvorrichtung (25) nach einem der vorhergehenden Ansprüche.

13. Produktionsanlage (31) nach dem vorhergehenden, auf eine Produktionsanlage (31) gerichteten Anspruch, wobei die Produktionsanlage (31) mit Sektoren (28) zum Aufladen und/oder zur energetischen Kopplung an einer Prozesseinheit (35) und/oder beabstandet zu einer Prozesseinheit (35) ausgebildet ist.

14. Verfahren zur energetischen Kopplung einer magnetisch levitierbaren Transporteinheit (1) mit einer Empfangsspule (7), insbesondere nach einem der vorhergehenden Ansprüche, durch wenigstens einen Energieübertragungsbereich (49), insbesondere eine Sendespule (29), eines Sektors (28) einer Stator-Anordnung (26), wobei ein elektrischer Verbraucher (3), insbesondere eine elektrische Antriebseinheit (8), und/oder eine elektrische Speichereinheit (4) an der Transporteinheit (1) von wenigstens einem Sektor (28) der Stator-Anordnung (26) energetisch versorgt wird.

15. Verfahren nach dem vorhergehenden, auf ein Verfahren gerichteten Anspruch, wobei an der magnetisch levitierenden Transporteinheit (1) ein Sensor (36) angeordnet ist, der einen Zustand, insbesondere einen Ladezustand, der elektrischen Speichereinheit (4) und/oder einen Zustand des elektrischen Verbrauchers (3) der Transporteinheit (1) ermittelt, und/oder wobei die Transporteinheit (1) nach einem Signal des oder eines Sensors (36) und/oder einer vorgegebenen Zeitspanne und/oder eines vorgegebenen Verbrauchs den oder einen Sektor und/oder eine Prozesseinheit (35) anfährt.

16. Verfahren nach einem der vorhergehenden, auf ein Verfahren gerichteten Ansprüche, wobei die Versorgung der Transporteinheit (1) simultan zu einer Bewegung der Transporteinheit (1) stattfindet und/oder wobei die Transporteinheit (1) über alle Sektoren (28) der Stator-Anordnung (26) versorgt wird und/oder wobei Daten des oder eines Sensors (36) über eine Datenverarbeitungsvorrichtung verarbeitet und/oder über eine drahtlose Kommunikationseinheit kommuniziert werden.

17. Verfahren, insbesondere nach einem der vorhergehenden, auf ein Verfahren gerichteten Ansprüche, wobei eine Funktionseinheit (2), vorzugsweise bei stehender Transporteinheit (1) und/oder bei bewegender Transporteinheit (1), zumindest eine Prozesseinheit (35) zum Befüllen und eine Prozesseinheit (35) zum Verschließen anfährt, wobei die Funktionseinheit (2) aus einer Versorgung der Transporteinheit (1) gespeist wird, insbesondere wobei zumindest ein Gebinde über einen auf der Funktionseinheit (2) sitzenden Antrieb einer Füllposition, vorzugsweise einer Füllnadel (47) zum Befüllen, und/oder einer Position zum Verschließen des Gebindes angenähert wird.

18. Verwendung einer Energieübertragung an eine magnetisch levitierbare Transporteinheit (1) und/oder einer Energiespeicherung auf einer magnetisch levitierbaren Transporteinheit (1), insbesondere einer magnetisch levitierbaren Transporteinheit (1) nach einem der Ansprüche 1 bis 7, bei einem Aseptic-Fill-Finish-Verfahren und/oder bei einer Aseptic-Fill-Finish-Produktionsanlage 50.

19. Verwendung einer Energieübertragung an eine magnetisch levitierbare Transporteinheit (1) und/oder einer Energiespeicherung auf einer magnetisch levitierbaren Transporteinheit (1), insbesondere einer magnetisch levitierbaren Transporteinheit (1) nach einem der Ansprüche 1 bis 7, zur Betätigung einer elektrischen Funktionseinheit (2), insbesondere eines über ein vorzugsweise motorisch angetriebenes Greifelement (12) zur Übergabe von zumindest einem Behälter (21) von einer magnetisch levitierbaren Transporteinheit (1) an eine andere magnetisch levitierbare Transporteinheit (1) und/oder von einer magnetisch levitierbaren Transporteinheit (1)und/oder von einer Prozesseinheit (35) und/oder an eine Prozesseinheit (35).
